# EUROPEAN PATENT APPLICATION

(11) **EP 3 780 336 A1**
(43) Date of publication of application: **17.02.2021**
(21) Application number: 19777689.1
(22) Date of filing: 29.03.2019
(51) Int. Cl.: H02J 50/12, H01F 5/00, H01F 38/14, H02J 7/00

(54) **COIL AND COIL PAIR, POWER TRANSMISSION DEVICE AND POWER RECEIVING DEVICE, AND POWER TRANSMISSION SYSTEM**

(30) Priority: 30.03.2018 JP 2018069362; 30.08.2018 JP 2018161912
(71) Applicant: Dai Nippon Printing Co., Ltd., Tokyo 162-8001 (JP)
(72) Inventor: OKABE, Masato, Tokyo 162-8001 (JP)
(74) Representative: Beck Greener LLP
(86) International application number: PCT/JP2019/013998
(87) International publication number: WO 2019/189760

(57) **Abstract**

Provided is a coil capable of smoothing the current density in a coil used in a contactless power transmission system, improving the freedom with which the coil can be positioned, improving the efficiency with which a winding wire material is used, and suppressing the generation of heat by the coil. A coil CL1-1 which is obtained by winding a winding wire and is to be used in the transmission or receipt of power during contactless power transmission, wherein the cross-sectional area of the winding wire increases from the outermost peripheral end section of the coil CL1-1 toward the innermost peripheral end section thereof.

## Description

### TECHNICAL FIELD

The present invention relates to a technical field of coils and coil pairs, power transmission apparatuses and power reception apparatuses, and power transmission systems, and more particularly, to a technical field of coils and coil pairs for wireless power transmission, wireless power transmission apparatuses and power reception apparatuses using the coil pairs, and power transmission systems.

### BACKGROUND ART

In recent years, electric vehicles equipped with a storage battery such as a lithium-ion battery have been becoming popular, for example. In such an electric vehicle, the electric power stored in the storage battery is used to drive the motor to move the electric vehicle. Therefore, efficient charging of the storage battery is required. In view of this, studies are being made on so-called wireless power transmission using a power receiving coil and a power transmitting coil that are disposed at a distance from each other and to face each other, as a method for charging a storage battery mounted in an electric vehicle without physically connecting a charging plug or the like to the electric vehicle. Wireless power transmission methods normally include an electric-field coupling method, an electromagnetic induction method, a magnetic-field resonance method, and the like. In a case where these methods are compared with one another in terms of usable frequency, the degree of freedom in positions in horizontal and vertical directions, transmission efficiency, and the like, for example, an electric-field coupling method using capacitors and a magnetic-field resonance method using coils are considered promising as wireless power transmission methods for charging a storage battery mounted in an electric vehicle, and research and development on these methods are being actively conducted. The citation list of literatures disclosing such a background art include Patent Literature 1 listed below, for example. A coil disclosed in Patent Literature 1 is designed so that the wound wires forming the coil have a wider interval at an inner portion. Patent Literature 1 also discloses a coil formed with wound wires that are connected to each other at the center of the coil and have winding directions opposite to each other.

### CITATION LIST

### PATENT DOCUMENT

Patent Document 1: JP 2013-513356 A

### DISCLOSURE OF INVENTION

### PROBLEMS TO BE SOLVED BY THE INVENTION

Here, as for a coil that is used in a wireless power transmission system, in a case where the cross-sectional area of a wound wire that forms the coil is constant between an inner circumferential portion and an outer circumferential portion of the coil, the current density is normally higher at a portion closer to the center of the coil.

In addition to this, according to an experiment conducted by the inventor of the present invention, in a case where all cross-sectional areas of the wound wire forming the coil are constant, a portion at which the density of the current flowing therein is high appears in the coil. As a result of further studies made on this aspect, it was found that the current density becomes higher at the rounded corners of the rectangular coil.

Because of the above circumstances, if the cross-sectional areas are increased in the entire coil to reduce heat generation due to these high current densities, the entire coil will become larger. As a result, the degree of freedom in arrangement of coils will become lower, and a larger amount of material will be required as the wound wires, which will lead to a decrease in the efficiency of use of the materials. Also, in a case where the wound wires of the coil are spaced apart for heat dissipation, the size of the coil will eventually become larger. Further, if the width of the wound wires is increased, or the wound wires are spaced further apart from each other, the resonance frequency of the coil will become higher. However, Patent Literature 1 mentioned above does not even touch on these problems.

Therefore, the present invention has been made in view of the above problems, and an example of its object is to provide a coil and a coil pair that are capable of levelling the current density in coils used in a wireless power transmission system and increasing the degree of freedom in arrangement of the coils and the efficiency of use of the wound wire material, and are also capable of reducing heat generation from the coils. The present invention also aims to provide a wireless power transmission apparatus and a wireless power reception apparatus each using the coil pair, and a power transmission system.

### SOLUTIONS TO THE PROBLEMS

In order to solve the above-described problem, the invention in claim 1 is a coil that is used for power transmission or power reception in wireless power transmission, and is formed with a wound wire, wherein a cross-sectional area of the wound wire varies depending on a position of the wound wire in a winding.

According to the invention disclosed in claim 1, the cross-sectional area of the wound wire varies depending on the position of the wound wire on the winding forming the coil. Therefore, the density of the current flowing in the wound wire is leveled. Thus, it is possible to increase the degree of freedom in arrangement of the coil and the efficiency of use of the wound wire material, and reduce heat generation from the coil.

In order to solve the above-described problem, the invention in claim 2 is the coil according to claim 1, wherein the cross-sectional area increases in a direction from an outermost circumferential end toward an innermost circumferential end of the coil.

According to the invention disclosed in claim 2, in addition to the effect of the invention of claim 1, the cross-sectional area of the wound wire of the coil increases in the direction from the outermost circumferential end toward the innermost circumferential end. Therefore, the cross-sectional area is made larger at an inner circumferential portion with a higher density of current flowing in the wound wire. Thus, it is possible to increase the degree of freedom in arrangement of the coil and the efficiency of use of the wound wire material, and reduce heat generation from the coil.

In order to solve the above-described problem, the invention in claim 3 is the coil according to claim 2, wherein the coil comprises a linear portion at which the wound wire is straight, and a curved portion at which the wound wire is curved, and the cross-sectional area is constant at the linear portion, and increases at the curved portion.

According to the invention disclosed in claim 3, in addition to the effect of the invention of claim 2, the coil includes a linear portion and a curved portion, and the cross-sectional area of the wound wire is constant at the linear portion while increasing at the curved portion. Thus, it is possible to level current density while simplifying the process for manufacturing the coil.

In order to solve the above-described problem, the invention in claim 4 is the coil according to claim 3, wherein a width of the wound wire is constant at the linear portion, and the width increases in the direction from the outermost circumferential end toward the innermost circumferential end at the curved portion, so that the cross-sectional area of the entire coil increases in the direction from the outermost circumferential end toward the innermost circumferential end.

According to the invention disclosed in claim 4, in addition to the effect of the invention of claim 3, the width of the wound wire of the coil is constant at the linear portion, while the width becomes greater in the direction from the outermost circumferential end toward the innermost circumferential end at the curved portion. Accordingly, the cross-sectional area of the entire coil is larger. Thus, it is possible to level current density while simplifying the process for manufacturing the coil.

In order to solve the above-described problem, the invention in claim 5 is the coil according to claim 1 or 2, wherein the coil comprises a plurality of linear portions each formed with the wound wire that is straight, and a plurality of connecting portions each formed by the wound wire connecting the wound wires forming two of the linear portions, the two linear portions having different extending directions, and a connecting portion cross-sectional area that is the cross-sectional area of at least part of a connecting portion wound wire that is the wound wire forming the connecting portions included in one winding is larger than a linear portion cross-sectional area that is the cross-sectional area of a linear portion wound wire that is the wound wire forming the linear portions included in the one winding.

According to the invention disclosed in claim 5, in addition to the effect of the invention of claim 1 or 2, the connecting portion cross-sectional area is larger than the linear portion cross-sectional area. Therefore, the connecting portion cross-sectional area with a higher density of current flowing in the wound wire is made larger, so that the density is leveled. Thus, it is possible to increase the degree of freedom in arrangement of the coil and the efficiency of use of the wound wire material, and reduce heat generation from the coil.

In order to solve the above-described problem, the invention in claim 6 is the coil according to any one of claims 1 to 5, wherein the coil comprises: an outer-inner wound wire that is the wound wire wound from an outer circumferential side to an inner circumferential side of the coil; and an inner-outer wound wire that is the wound wire wound from the inner circumferential side to the outer circumferential side of the coil, and the outer-inner wound wire and the inner-outer wound wire are stacked on each other with an insulating portion interposed in between, so that a winding of the outer-inner wound wire and a winding of the inner-outer wound wire overlap with each other.

According to the invention disclosed in claim 6, in addition to the effect of the invention of any one of claims 1 to 5, the coil includes an outer-inner wound wire and an inner-outer wound wire, and the outer-inner wound wire and the inner-outer wound wire are stacked on each other with an insulating portion interposed in between, so that the winding of the outer-inner wound wire and the winding of the inner-outer wound wire overlap with each other. Thus, it is possible to achieve both adj ustment of resonance frequency between the outer-inner wound wire and the inner-outer wound wire, and leveling of current density.

In order to solve the above-described problem, the invention in claim 7 is the coil according to any one of claims 1 to 6, wherein the wound wire is a thin-film wire that is flat in a radial direction of the coil.

According to the invention disclosed in claim 7, in addition to the effect of the invention of any one of claims 1 to 6, the wound wire is a thin-film wire that is flat in the radial direction of the coil. Thus, the resonance frequency in the entire coil can be adjusted.

In order to solve the above-described problem, the invention in claim 8 is a coil pair comprising: a coil that is the coil according to any one of claims 1 to 7, and is open at either end; and a loop coil that supplies the coil with electric power to be transmitted at a time of power transmission, and receives, from the coil, electric power received by the coil at a time of power reception, the loop coil being stacked on the coil.

According to the invention disclosed in claim 8, the coil pair includes: a coil that is the coil according to any one of claims 1 to 7, and is open at either end; and a loop coil that is stacked on the coil. Thus, leveling of current density can be effectively performed in a wireless power transmission system that uses the coil pair including the coil and the loop coil for power transmission or power reception.

In order to solve the above-described problem, the invention in claim 9 is a power transmission apparatus that is included in a power transmission system that includes the power transmission apparatus and a power reception apparatus disposed at a distance from the power transmission apparatus, and transmits electric power from the power transmission apparatus to the power reception apparatus in a non-contact manner, the power transmission apparatus comprising : one of a power transmitting coil that is the coil according to any one of claims 1 to 7, and a power transmitting coil pair that is the coil pair according to claim 8; and an output means that outputs electric power to be transmitted, to the one of the power transmitting coil and the power transmitting coil pair.

In order to solve the above-described problem, the invention in claim 10 is a power reception apparatus that is included in a power transmission system that includes a power transmission apparatus and the power reception apparatus disposed at a distance from the power transmission apparatus, and transmits electric power from the power transmission apparatus to the power reception apparatus in a non-contact manner, the power reception apparatus comprising: one of a power receiving coil that is the coil according to any one of claims 1 to 7, and a power receiving coil pair that is the coil pair according to claim 8; and an input means that is connected to the one of the power receiving coil and the power receiving coil pair.

In order to solve the above-described problem, the invention in claim 11 is a wireless power transmission system comprising: the power transmission apparatus according to claim 9; and a power reception apparatus that is disposed at a distance from the power transmission apparatus and is positioned to face the one of the power transmitting coil and the power transmitting coil pair, and receives electric power transmitted from the power transmission apparatus.

In order to solve the above-described problem, the invention in claim 12 is a wireless power transmission system comprising: a power transmission apparatus; and a power reception apparatus that is the power reception apparatus according to claim 10, is disposed at a distance from the power transmission apparatus, and receives electric power transmitted from the power transmission apparatus, the one of the power receiving coil and the power receiving coil pair being positioned to face the power transmission apparatus .

### EFFECTS OF THE INVENTION

According to the present invention, the density of the current flowing in a wound wire is leveled. Thus, the degree of freedom in arrangement of coils and the efficiency of use of the wound wire material can be increased, and heat generation from the coils can be reduced.

### BRIEF DESCRIPTION OF THE DRAWINGS

Fig. 1 is a block figure showing a schematic configuration of a power transmission system of a first embodiment.
Fig. 2 is a plan view (i) showing the structure of a coil of the first embodiment.
Fig. 3 is a plan view (ii) showing the structure of a coil of the first embodiment.
Fig. 4 is a plan view (iii) showing the structure of a coil of the first embodiment.
Fig. 5 is a plan view (iv) showing the structure of a coil of the first embodiment.
Fig. 6 is a partial cross-sectional view showing the structure of a coil of the first embodiment.
Fig. 7 is a graph showing the relationship between wound wire numbers and current density, as the effects of the structure of a coil of the first embodiment.
Fig. 8 is a figure showing an example method for manufacturing a coil of Modification 1-1: (a) is a cross-sectional view of the wound wire, showing the first stage in the manufacturing method; (b) is a cross-sectional view of the wound wire, showing the second stage in the manufacturing method; and (c) is a cross-sectional view of the wound wire, showing the third stage in the manufacturing method.
Fig. 9 is a graph showing the relationship between wound wire numbers and current density, as the effects of the structure of a coil of Modification 1-1.
Fig. 10 is a block figure showing a schematic configuration of a power transmission system of a second embodiment.
Fig. 11 is a plan view (i) showing the structure of a coil of the second embodiment.
Fig. 12 is a plan view (ii) showing the structure of a coil of the second embodiment.
Fig. 13 is a plan view (iii) showing the structure of a coil of the second embodiment.
Fig. 14 is a plan view (iv) showing the structure of a coil of the second embodiment.
Fig. 15 is a partial cross-sectional view showing the structure of a coil of the second embodiment.
Fig. 16 is a graph showing the relationship between reflection/transmission efficiency and frequency as the effects of the structure of a coil of the second embodiment.
Fig. 17 is a graph showing the relationship between wound wire numbers and current density, as the effects of the structure of a coil of the second embodiment.
Fig. 18 is a plan view (i) showing the structure of a coil of Modification 2-1.
Fig. 19 is a plan view (ii) showing the structure of a coil of Modification 2-1.
Fig. 20 is a partially enlarged plan view and the like of the structure of a coil of Modification 2-1: (a) is the partially enlarged plan view; and (b) is a graph showing the relationship between wound wire numbers and widths thereof in the structure of a coil of Modification 2-1.
Fig. 21 is a plan view (iii) showing the structure of a coil of Modification 2-1.
Fig. 22 is graphs showing the effects of the structure of a coil of Modification 2-1: (a) is a graph showing the relationship between reflection/transmission efficiency and frequency as the effects; and (b) is a graph showing the relationship between wound wire numbers and current density as the effects.
Fig. 23 is a figure showing an example method for manufacturing a coil of Modification 2-2: (a) is a cross-sectional view of the wound wire, showing the first stage in the manufacturing method; (b) is a cross-sectional view of the wound wire, showing the second stage in the manufacturing method; and (c) is a cross-sectional view of the wound wire, showing the third stage in the manufacturing method.

### MODES FOR CARRYING OUT THE INVENTION

Next, modes for carrying out the present invention are described with reference to the drawings. Note that each of the embodiments and modifications described below is an embodiment or a modification in a case where the present invention is applied to a power transmission system that transmits electric power for charging a charger mounted in an electric vehicle, to an electric vehicle including the charger, in a non-contact manner by a magnetic-field resonance method. In this case, the present invention can also be applied to power transmission methods other than the magnetic-field resonance method.

Here, a power transmission system according to a magnetic-field resonance method of each of the embodiments and the modifications includes: a power transmitting coil that transmits electric power; and a power receiving coil that is positioned to face (or is opposed to) the power transmitting coil, and receives the electric power transmitted from the power transmitting coil. Further, the power transmitting coil has a configuration in which a power-transmitting loop coil described below and a power-transmitting open coil described below are stacked on each other. The power receiving coil also has a configuration in which a power-receiving open coil described later and a power-receiving loop coil described later are stacked on each other.

### (A) First Embodiment

### (I) Regarding the Overall Configuration and Operation of a Power Transmission System of a First Embodiment

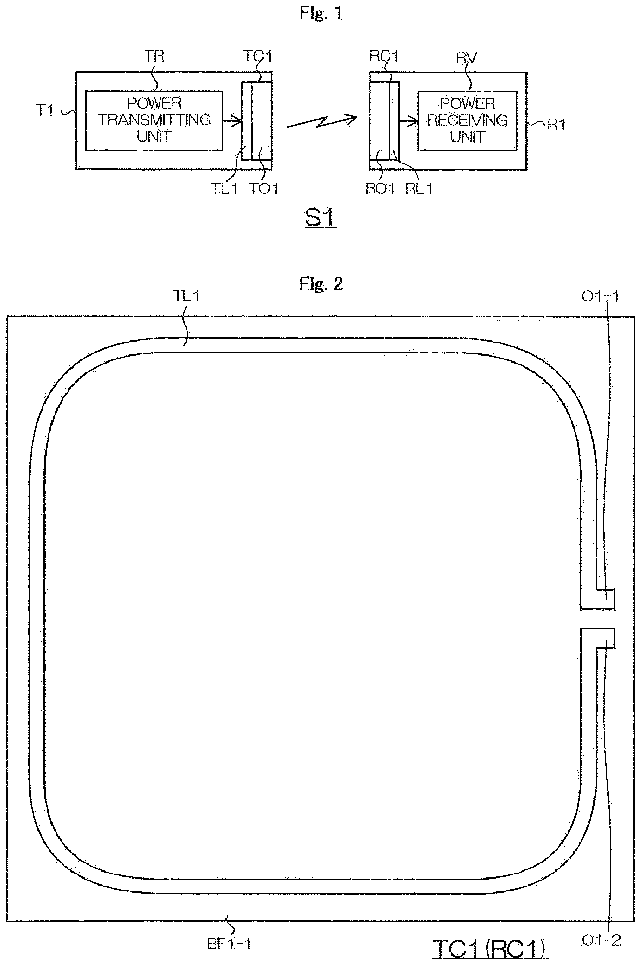

First, the overall configuration and operation of a power transmission system of a first embodiment is described with reference to Fig. 1. Note that Fig. 1 is a block figure showing a schematic configuration of a power transmission system of the first embodiment.

As shown in Fig. 1, a power transmission system S1 of the first embodiment includes: a power reception apparatus R1 including a power receiving unit RV and the power receiving coil RC1; and a power transmission apparatus T1 including a power transmitting unit TR and the power transmitting coil TC1. In this case, the power reception apparatus R1 is mounted on the electric vehicle, and is connected to a storage battery (not shown) mounted on the electric vehicle. On the other hand, the power transmission apparatus T1 is installed on the ground where the electric vehicle moves or stops . Further, in a case where the storage battery is charged, the electric vehicle is driven or stopped so that the power receiving coil RC1 of the power reception apparatus R1 and the power transmitting coil TC1 of the power transmission apparatus T1 face each other. Note that, when the storage battery is charged by the power transmission system S1 of the first embodiment, the power transmission apparatus T1 can transmit electric power to the power reception apparatus R1 mounted in a stopped electric vehicle, via the power transmitting coil TC1 of the power transmission apparatus T1 installed on the ground at a position below the stopped vehicle. Other than the above, the power transmission apparatus T1 may also be designed to continuously transmit electric power to the power reception apparatus R1 mounted on a moving electric vehicle, via the power transmitting coils TC1 of a plurality of power transmission apparatuses T1 installed at regular intervals on the road on which the electric vehicle is moving. In this case, the power transmitting unit TR corresponds to an example of the "output means" of the present invention, and the power receiving unit RV corresponds to an example of the "input means" of the present invention.

Meanwhile, the power transmitting coil TC1 includes a power-transmitting loop coil TL1 and a power-transmitting open coil TO1. Also, the power receiving coil RC1 includes a power-receiving open coil RO1 and a power-receiving loop coil RL1. In this case, the electric power to be transmitted is input to the power-transmitting loop coil TL1 from the power transmitting unit TR. The power-transmitting open coil TO1 is then stacked concentrically on the power-transmitting loop coil TL1, and both ends thereof are open. On the other hand, the power-receiving open coil RO1 is positioned to face the power-transmitting open coil TO1, and both ends thereof are open. The power-receiving loop coil RL1 is then stacked concentrically on the power-receiving open coil RO1, and outputs electric power received from the power transmitting coil TC1 to the power receiving unit RV via the power-receiving open coil RO1 by a magnetic-field resonance method. In this case, the power transmitting coil TC1 or the power receiving coil RC1 corresponds to an example of the "coil pair" of the present invention.

In the above configuration, the power transmitting unit TR of the power transmission apparatus T1 outputs electric power to be transmitted to the power reception apparatus R1, to the power transmitting coil TC1, while complying with regulations and the like such as the Radio Act in the country in which the power transmission system S1 is used, for example. In this case, the above regulations and the like restrict leakage magnetic fields to levels equal to or lower than a predetermined level determined, in consideration of the influence on the human body, for example. Further, to enable use of interconnection between all the power transmission apparatuses T1 and the power reception apparatus R1, it is eventually necessary for both sides to use a frequency within a predetermined range, which is why the frequency or frequency band within the above predetermined range needs to follow recommendations made as the above regulations and the like by an international organization such as the International Organization for Standardization (ISO) or the International Electrotechnical Commission (IEC). Furthermore, because the lower limit value of transmission efficiency in consideration of a predetermined positional deviation between the power transmitting coils TC1 and the power receiving coil RC1 is specified by the above international organization, a high power transmission efficiency is required.

On the other hand, the power receiving coil RC1 of the power reception apparatus R1 that has received electric power from the power transmitting coil TC1 by the magnetic-field resonance method outputs the received electric power to the power receiving unit RV. As a result, the power receiving unit RV converts the output corresponding to the electric power (a high-frequency power of 85 kHz, for example) into a direct current (DC) with a power converting unit (not shown), and outputs the DC to the storage battery of the electric vehicle. Thus, the storage battery is charged with a necessary amount of electric power.

### (II) Configuration of the Power Transmitting Coil TC1 (the Power Receiving Coil RC1)

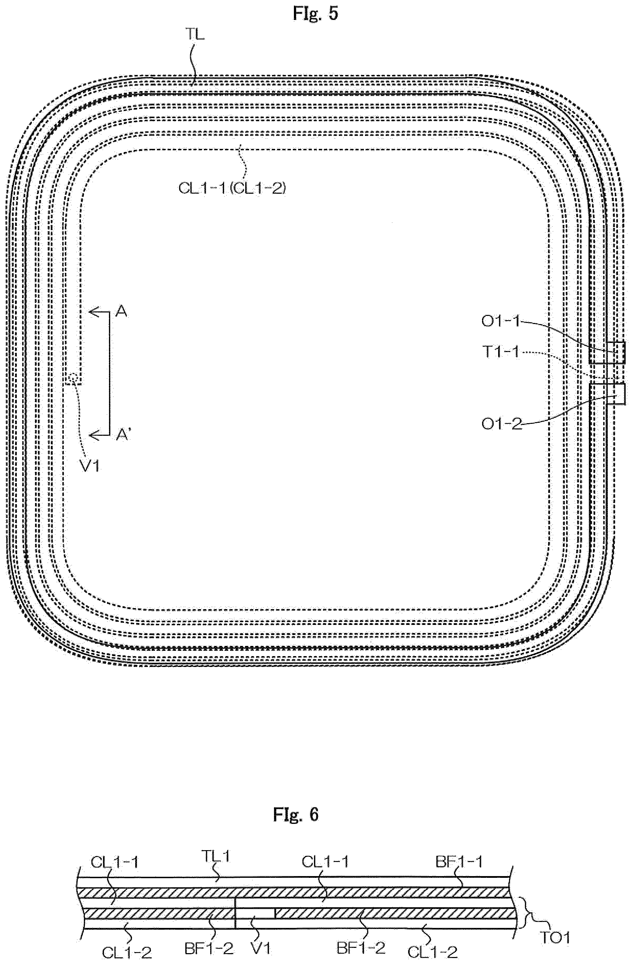

Next, the configurations of the power transmitting coil TC1 and the power receiving coil RC1 of the first embodiment that are used in the above power transmission system S1 of the first embodiment are described, with reference to Figs. 2 to 6. Note that the power transmitting coil TC1 and the power receiving coil RC1 of the first embodiment basically have the same configuration. That is, the configuration of the power-transmitting loop coil TL1 and the configuration of the power-receiving loop coil RL1 are basically the same. Likewise, the configuration of the power-transmitting open coil TO1 and the configuration of the power-receiving open coil RO1 are basically the same. Further, the positional relationship between the power-transmitting loop coil TL1 and the power-transmitting open coil TO1 in the power transmitting coil TC1 is basically the same as the positional relationship between the power-receiving loop coil RL1 and the power-receiving open coil RO1 in the power receiving coil RC1. Therefore, in the description below, the structure of the power transmitting coil TC1 is described. Meanwhile, Figs. 2 to 5 are plan views of the structure of the power transmitting coil TC1 of the first embodiment, and Fig. 6 is a partial cross-sectional view of the structure of the power transmitting coil TC1 of the first embodiment. Note that Figs. 2 to 5 are plan views of the power transmission apparatus T1 in a case where the power transmitting coil TC1 is viewed from the side of the power transmitting unit TR.

As shown in the plan view in Fig. 2, the power transmitting coil TC1 of the first embodiment has a configuration in which the power-transmitting loop coil TL1 and the power-transmitting open coil TO1 not shown in Fig. 2 are stacked in the direction of the paper surface of Fig. 2, with an insulating film BF1-1 (described later in detail) being interposed in between. Further, the power-transmitting open coil TO1 has a configuration in which two coils CL1-1 and CL1-2, which will be described later, are stacked in the direction of the paper surface of Fig. 2, with an insulating film BF1-2 (described later in detail) being interposed in between. Note that, in the first embodiment, the film BF1-1 is used for insulation between the power-transmitting loop coil TL1 and the power-transmitting open coil TO1, and the film BF1-2 is used for insulation between the coil CL1-1 and the coil CL1-2. Other than these films, an insulating material such as a glass epoxy material may be used. Also, to efficiently dissipate the heat generated by the power transmitting coil TC1, it is possible to use a thin-film material in which ceramic particles or the like are dispersed, for example. Further, an appropriate void retaining material may be used, to form a stack having a necessary void therein. Furthermore, the centers of the windings of the copper thin-film wires (described later) that form the power-transmitting loop coil TL1, and the coils CL1-1 and CL1-2 are the same or substantially the same as one another. Note that the coil CL1-1 corresponds to an example of the "outer-inner wound wire" of the present invention, and the coil CL1-2 corresponds to an example of the "inner-outer wound wire" of the present invention.

As shown in Fig. 2, the power-transmitting loop coil TL1 has a connection terminal O1-1 and a connection terminal 01-2 to be connected to the power transmitting unit TR on one side of the outermost circumferential portion thereof. Further, the power-transmitting loop coil TL1 is formed with a copper thin-film wire that is wound once (one turn), for example, and both ends (the center of the right side portion in the case shown in Fig. 2) of the copper thin-film wire are the connection terminal O1-1 and the connection terminal 01-2. Note that the copper thin-film wire forming the power-transmitting loop coil TL1 has the same width and the same thickness over the entire circumference of the power-transmitting loop coil TL1. Further, in the power-transmitting loop coil TL1, linear portions are formed on the upper side portion, the lower side portion, the left side portion, and the right side portion in Fig. 2, and the respective linear portions are connected by curved portions.

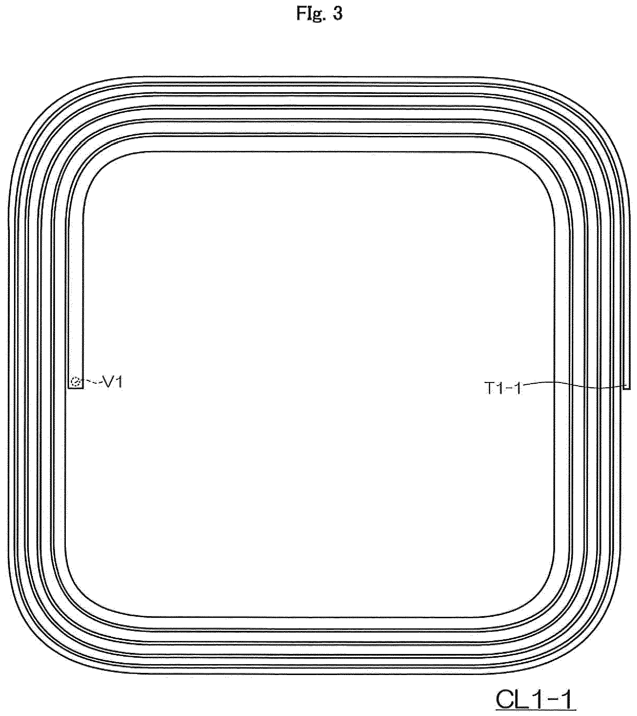

Next, the configuration of the coil CL1-1 that is stacked immediately below the power-transmitting loop coil TL1 via the film BF1-1 and forms the power-transmitting open coil TO1 is described, with reference to Fig. 3. Note that Fig. 3 is a plan view showing only the coil CL1-1.

As shown in Fig. 3, the coil CL1-1 forming the power-transmitting open coil TO1 has an open end T1-1 at the outermost circumferential portion. Here, the coil CL1-1 is formed with a copper thin-film wire that is spirally wound five and a half times (5.5 turns) counterclockwise from the outermost circumferential portion to the innermost circumferential portion, starting from the open end T1-1, for example. Further, a via V1 for forming an electrical connection with the coil CL1-2 stacked immediately below the coil CL1-1 in the direction of the paper surface of Fig. 3 is formed at the innermost circumferential portion. Note that the copper thin-film wire forming the coil CL1-1 has the same thickness over the entire circumference of the coil CL1-1. On the other hand, as shown in Fig. 3, the width of the copper thin-film wire increases in the direction from the open end T1-1 at the outermost circumferential end of the coil CL1-1 toward the portion to which the via V1 is connected at the innermost circumferential end. With this structure, the cross-sectional area of the coil CL1-1 increases in the direction from the open end T1-1 to the portion to which the via V1 is connected. Further, in the coil CL1-1, linear portions that are parallel to one another are formed on the upper side portion, the lower side portion, the left side portion, and the right side portion in Fig. 3, and the respective linear portions are connected to one another by curved portions that are substantially concentric arc-like portions. Furthermore, the width of the copper thin-film wire forming the coil CL1-1 is constant in each linear portion, but increases in the direction toward the innermost circumferential end at the respective curved portions connecting the linear portions . In this case, the width of the copper thin-film wire forming the coil CL1-1 is only required to increase in the direction from the outermost circumferential end toward the innermost circumferential end in the entire coil CL1-1. Even if the width of the copper thin-film wire temporarily (partially) decreases in the direction from the outermost circumferential end toward the innermost circumferential end, for example, this does not affect the effects of power transmission using the power transmission system S1 of the first embodiment.

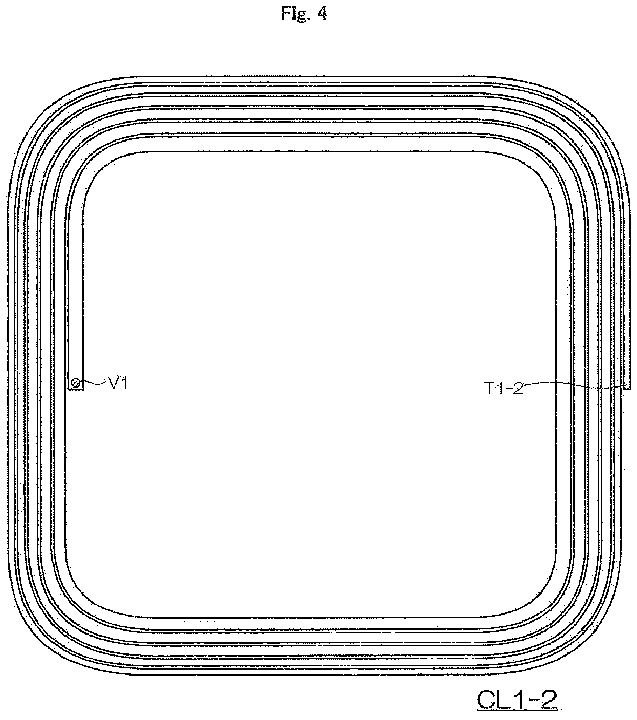

Next, the configuration of the coil CL1-2 that is stacked immediately below the coil CL1-1 via the film BF1-2 is described, with reference to Fig. 4. Note that Fig. 4 is a plan view showing only the coil CL1-2.

As shown in Fig. 4, the coil CL1-2, which forms the power-transmitting open coil TO1 together with the coil CL1-1, has the via VI for forming an electrical connection with the coil CL1-1, and the via V1 is connected to the coil CL1-1 at its innermost circumferential portion. That is, the coil CL1-1 and the coil CL1-2 are connected in series . Here, the coil CL1-2 is formed with a copper thin-film wire that is spirally wound five and a half times (5.5 turns) clockwise (which is the direction opposite of the coil CL1-1) from the innermost circumferential portion to the outermost circumferential portion, starting from the via V1, for example. Further, its outermost circumferential portion is an open end T1-2. Note that the copper thin-film wire forming the coil CL1-2 has the same thickness over the entire circumference of the coil CL1-2. On the other hand, as shown in Fig. 4, the width of the copper thin-film wire increases in the direction from the open end T1-2 at the outermost circumferential end of the coil CL1-2 toward the portion to which the via V1 is connected at the innermost circumferential end. With this structure, the cross-sectional area of the coil CL1-2 increases in the direction from the open end T1-2 to the portion to which the via V1 is connected. Further, in the coil CL1-2, linear portions that are parallel to one another are formed on the upper side portion, the lower side portion, the left side portion, and the right side portion in Fig. 4, and the respective linear portions are connected to one another by curved portions that are substantially concentric arc-like portions, as in the coil CL1-1. Furthermore, the width of the copper thin-film wire forming the coil CL1-2 is constant in each linear portion, but increases in the direction toward the innermost circumferential end at the respective curved portions connecting the linear portions. In this case, the width of the copper thin-film wire forming the coil CL1-2 is only required to increase in the direction from the outermost circumferential end toward the innermost circumferential end in the entire coil CL1-2, and may temporarily (partially) decreases in the direction from the outermost circumferential end toward the innermost circumferential end, for example, like the width of the copper thin-film wire forming the coil CL1-1.

Here, regarding the positional relationship between the copper thin-film wires forming the coil CL1-1 and the coil CL1-2, the respective copper thin-film wires are wound so that the position of the copper thin-film wire of the coil CL1-1 wound in the counterclockwise direction coincides with the position of the copper thin-film wire of the coil CL1-2 wound in the clockwise direction when viewed from the center of the winding of each of the coils CL1-1 and CL1-2 . The coil CL1-1 and the coil CL1-2 are then connected in series by the via V1 connected to the innermost circumferential portion of each of the coils. Accordingly, the winding from the outermost circumferential portion to the innermost circumferential portion of the coil CL1-1 is turned back (folded back) in the opposite direction at the innermost circumferential portion, so that the coil CL1-2 is wound from the innermost circumferential portion to the outermost circumferential portion.

Next, the positional relationship between the copper thin-film wires forming the power-transmitting loop coil TL1 and the power-transmitting open coil TO1. (which are the coil CL1-1 and the coil CL1-2) is described, with reference to Fig. 5. Note that Fig. 5 is a plan view showing an overlapping state of the power-transmitting loop coil TL1 and the coils CL1-1 and CL1-2. In Fig. 5, the power-transmitting loop coil TL1 is indicated by a solid line, and each of the coils CL1-1 and CL1-2 of the power-transmitting open coil TO1 stacked immediately below the power-transmitting loop coil TL1 via the film BF1-1 (not shown in Fig. 5) is indicated by a dashed line. Note that the positional relationship between the copper thin-film wires forming the coils CL1-1 and CL1-2 is exactly the same in Fig. 5.

As indicated by a dashed line in Fig. 5, in the coil CL1-1 that is wound from the outer circumference toward the inner circumference, and is connected to the coil CL1-2 by the via V1 at the innermost circumferential portion, the copper thin-film wire is wound while the respective curved portions are formed so that the positions of the linear portions shift inward by the amount equivalent to a quarter of the pitch in the winding of the copper thin-film wire (the pitch being the radial distance between the center lines of the adjacent copper thin-film wire portions on the respective sides in the winding), for each quarter of the winding. On the other hand, as indicated by the solid line in Fig. 5, the power-transmitting loop coil TL1 is stacked along the outer edge of the coil CL1-1, and the connection terminal O1-1 and the connection terminal 01-2 each protrude outward from the winding.

As shown in Fig. 5 described above, in the power transmitting coil TC1 in which the power-transmitting loop coil TL1 and the coils CL1-1 and CL1-2 of the power-transmitting open coil TO1 are stacked, the respective copper thin-film wires forming the power-transmitting loop coil TL1 and the power-transmitting open coil TO1 (the coils CL1-1 and CL1-2) are stacked so as to substantially overlap with each other on each of the upper, lower, left, and right sides.

Next, the stacked state of the power-transmitting loop coil TL1 and the coils CL1-1 and CL1-2, and the connection state of the coil CL1-1 and the coil CL1-2 are described, with reference to Fig. 6, which is a cross-sectional view taken along the line A-A' defined in Fig. 5.

As shown in Fig. 6, in the left side portion in Figs. 2 to 5, the coil CL1-1 and the coil CL1-2 are stacked, with the film BF1-2 being interposed in between, and the respective components are electrically connected by the via V1. At the position of the via V1, the counterclockwise winding of the coil CL1-1 is turned back (folded back), to form the clockwise winding of the coil CL1-2. Meanwhile, the power-transmitting open coil TO1 formed with the coils CL1-1 and CL1-2, and the power-transmitting loop coil TL1 are stacked, with the film BF1-1 (see Fig. 2) being interposed in between.

### (III) Method for Manufacturing the Power Transmitting Coil TC1 and the Power Receiving Coil RC1

Next, a method for manufacturing the power transmitting coil TC1 and the power receiving coil RC1 of the first embodiment is described.

The manufacturing method may be a first manufacturing method that is basically the same as a conventional method and includes steps (a)-1 to (a) -11 described below, or may be a second manufacturing method or the like including steps (b) -1 to (b) -12 described below.

### (a) First Manufacturing Method

(a)-1: Forming a copper thin film on both entire surfaces of the film BF1-2
(a)-2: Applying resist onto each of the copper thin films (both sides) formed in (a)-1
(a)-3: Performing patterning on the resist applied in (a)-2, to form the copper thin-film wires of the coils CL1-1 and CL1-2 on the respective surfaces (here, patterning is performed so that the width of the coil CL1-1 (coil CL1-2) of the first embodiment becomes greater in the direction from the open end T1-1 (open end T1-2) at the outermost circumferential end of the coil CL1-1 (coil CL1-2) toward the portion to which the via V1 is connected at the innermost circumferential end, as described above.)
(a)-4: Performing etching after the patterning in (a)-3, to form the copper thin-film wires as the coils CL1-1 and CL1-2 (a) -5: The via V1 is formed, to complete the power-transmitting open coil TO1.
(a)-6: Forming a copper thin film on one surface of the film BF1-1
(a)-7: Applying resist onto the copper thin film formed in (a)-6
(a)-8: Performing patterning on the resist applied in (a) -7, to form the copper thin-film wire of the power-transmitting loop coil TL1
(a)-9: Performing etching after the patterning in (a)-8, to form the copper thin-film wire as the power-transmitting loop coil TL1
(a)-10: Bonding the power-transmitting open coil TO1 of (a) -5 and the power-transmitting loop coil TL1 of (a)-9 to each other, to form the power transmitting coil TC1
(a)-11: Connecting the connection terminal O1-1 and the connection terminal 01-2 to the power transmitting unit TR (in the case of the power transmission apparatus T1) or to the power receiving unit RV (in the case of the power reception apparatus R1)

### (b) Second Manufacturing Method

(b)-1: Forming a copper thin film on both entire surfaces of the film BF1-2
(b)-2: Forming a through hole with a laser or the like at the position corresponding to the via V1
(b)-3: Forming the via V1 by performing copper plating processing on the entire film including the through hole by an electroless copper plating method and an electrolytic copper plating method
(b)-4: Applying resist onto the copper plating (both sides) formed in (b)-3
(b)-5: Performing patterning on the resist applied in (b)-4, to form the copper thin-film wires of the coils CL1-1 and CL1-2 (here, patterning is performed so that the width of the coil CL1-1 (coil CL1-2) of the first embodiment becomes greater in the direction from the open end T1-1 (open end T1-2) at the outermost circumferential end of the coil CL1-1 (coil CL1-2) toward the portion to which the via V1 is connected at the innermost circumferential end, as described above.)
(b)-6: Etching is performed after the patterning in (b)-5, to form the copper thin-film wires as the coils CL1-1 and CL1-2 and complete the power-transmitting open coil TO1.
(b)-7: Forming a copper thin film on one surface of the film BF1-1
(b)-8: Applying resist onto the copper thin film formed in (b)-7
(b)-9: Performing patterning on the resist applied in (b)-8, to form the copper thin-film wire of the power-transmitting loop coil TL1
(b)-10: Performing etching after the patterning in (b)-9, to form the copper thin-film wire as the power-transmitting loop coil TL1
(b) -11: Bonding the power-transmitting open coil TO1 of (b)-6 and the power-transmitting loop coil TL1 of (b)-10 to each other, to form the power transmitting coil TC1
(b)-12: Connecting the connection terminal O1-1 and the connection terminal 01-2 to the power transmitting unit TR (in the case of the power transmission apparatus T1) or to the power receiving unit RV (in the case of the power reception apparatus R1)

### Example 1

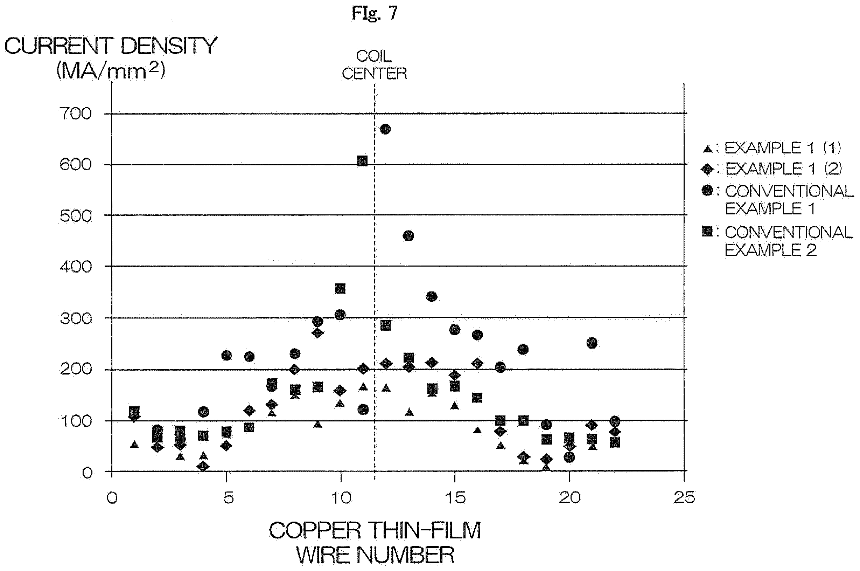

Next, the effects and the like to be achieved in a case where power transmission is performed with the power transmission system S1 of the first embodiment including the power transmitting coil TC1 and the power receiving coil RC1 of the first embodiment are described on the basis of the results of experiments (which are simulation results, as in the description below) conducted by the inventor of the present invention, with reference to Fig. 7. Note that Fig. 7 is a graph showing the relationship between copper thin-film wire numbers and current density, as the effects of the coil structure of the first embodiment. Here, the number of windings of the power-transmitting open coil TO1 or the power-receiving open coil RO1 having the effects shown in Fig. 7 is ten and a half (10.5 turns) as described later. The "copper thin-film wire numbers" in Fig. 7 corresponding to the structure are assigned to the copper thin-film wire portions existing on the straight line connecting the open end T1-1 (open end T1-2) of the power-transmitting open coil TO1 or the power-receiving open coil R01 to the via V1 (the number of the copper thin-film wire portions is 22, because the number of windings is ten and a half). The number for the copper thin-film wire portion located at the outermost circumferential portion on the side of the via V1 is "1", and the number for the copper thin-film wire portion located at the outermost circumferential portion on the side of the open end T1-1 (open end T1-2) is "22". In this order, numbers are assigned. Further, the respective structural specifications of the coils CL1-1 and CL1-2 of the first embodiment, which have obtained the experimental results shown in Fig. 7, are as follows.
- Each outer dimension of the power-transmitting open coil TO1 and the power-receiving open coil RO1 in the planes shown in Figs. 2 to 5: about 100 mm long × about 100 mm wide
- The thicknesses of the copper thin-film wires of the coils CL1-1 and CL1-2: entirely constant and identical
- The number of windings of the copper thin-film wires of the coils CL1-1 and CL1-2: ten and a half
- The width of the copper thin-film wires of the coils CL1-1 and CL1-2: increases from 0.6 mm to 2.6 mm in the direction from the innermost circumferential end toward the outermost circumferential end (or increases by 0.2 mm at each curved portion, the average width of the entire copper thin-film wires being 1. 67 mm.)
- The pitch in the coils CL1-1 and CL1-2: increases from 1.2 mm to 3.2 mm in the direction from the innermost circumferential end toward the outermost circumferential end (or increase by 0.2 mm at each curved portion)
- The distance between adjacent copper thin-film wire portions: 0.6 mm for both of the coils CL1-1 and CL1-2 Meanwhile, the structural specifications of each of the two coils (two coils that are stacked to form a power-transmitting open coil or a power-receiving open coil as conventional examples) that have obtained the experimental results shown as "conventional examples" in Fig. 7 are as follows.
- Each outer dimension of the power-transmitting open coil and the power-receiving open coil as the conventional examples: about 100 mm long × 100 mm wide
- The thickness of the copper thin-film wire of each of the coils as the conventional examples: entirely constant and identical
- The number of windings of the copper thin-film wire of each of the coils as the conventional examples: ten and a half
- The width of the copper thin-film wire of each of the coils as the conventional examples: constantly 1.4 mm from the innermost circumferential end to the outermost circumferential end
- The pitch of in each of the coils as the conventional examples : constantly 2.0 mm from the innermost circumferential end to the outermost circumferential end
- The distance between adjacent copper thin-film wire portions: 0.6 mm for each of the coils as the conventional examples

Here, as shown in Fig. 7, leveling of the current density in the entire coils CL1-1 and CL1-2 is achieved more effectively in the case of two Examples 1 having the same structure (indicated by "▲" and "◆" in Fig. 7) than in the case of the two conventional examples having the same structure (indicated by "●" and "■" in Fig. 7).

As described above, in power transmission using the power transmission system S1 of the first embodiment including the power transmitting coil TC1 and the power receiving coil RC1 of the first embodiment, the cross-sectional area of the copper thin-film wire of each of the concentrically-wound coils CL1-1 and CL1-2 increases in the direction from the outermost circumferential end toward the innermost circumferential end. Accordingly, the cross-sectional area is made larger at an inner circumferential portion having a higher current density in the copper thin-film wire, so that the current density is leveled. Thus, the degree of freedom in arrangement of the coils CL1-1 and CL1-2 and the efficiency of use of copper as the material can be increased, and heat generation from the coils CL1-1 and CL1-2 can be reduced.

Also, the coils CL1-1 and CL1-2 are formed with linear portions and curved portions, with the cross-sectional areas of the copper thin-film wires being constant at the linear portions and being increased at the curved portions. Thus, it is possible to level the current density while simplifying the process for manufacturing the coils CL1-1 and CL1-2.

Further, the width of the copper thin-film wires of the coils CL1-1 and CL1-2 is constant at each linear portion, but the width increases in the direction from the outermost circumferential end toward the innermost circumferential end at each curved portion. Accordingly, the respective cross-sectional areas of the coils CL1-1 and CL1-2 as a whole increase in the direction from the outermost circumferential end toward the innermost circumferential end. Thus, it is possible to level the current density, while simplifying the process for manufacturing the coils CL1-1 and CL1-2.

Furthermore, a series connection is formed with the coil CL1-1 and the coil CL1-2 that is wound in the direction opposite of the winding direction of the coil CL1-1 and is connected to the coil CL1-1, and the coils CL1-1 and CL1-2 are stacked, with the film BF1-2 being interposed in between, so that the center of the winding of the coil CL1-1 and the center of the winding of the coil CL1-2 coincide with each other. Thus, it is possible to achieve both adjustment of resonance frequency between the coil CL1-1 and the coil CL1-2, and leveling of current density.

Also, each of the coils CL1-1 and CL1-2 is formed with a copper thin-film wire that is flat in the radial direction of the coil. Thus, the resonance frequency of the entire power-transmitting open coil TO1 or the entire power-receiving open coil RO1 can be adjusted.

Further, both ends of the series connection formed with the coil CL1-1 and the coil CL1-2 are open as the open end T1-1 and the open end T1-2, respectively, and the power-transmitting loop coil TL1 or the power-receiving loop coil RL1 is disposed concentrically with respect to the coils CL1-1 and CL1-2. Thus, leveling of current density can be effectively performed in the wireless power transmission system S1 that uses the coils CL1-1 and CL1-2 and the power-transmitting loop coil TL1 or the power-receiving loop coil RL1 for power transmission or power reception.

### Modification 1

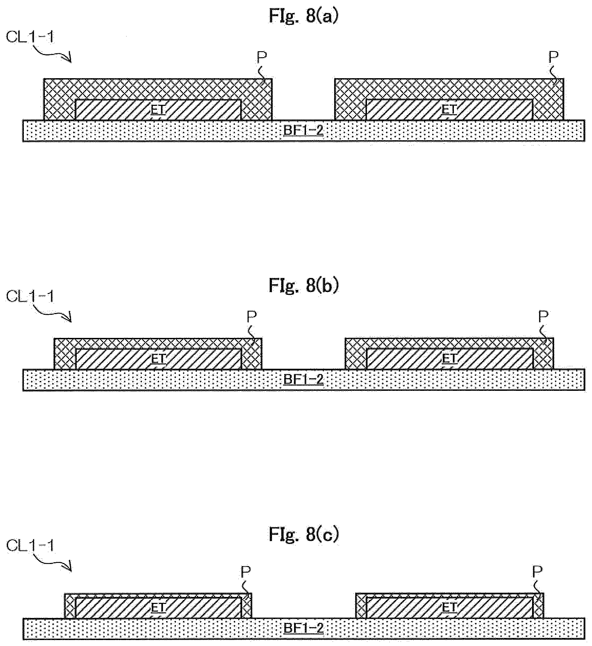

Next, Modification 1 of the present invention is described, with reference to Fig. 8.

### (i) Modification 1-1

First, Modification 1-1 is described. In the first embodiment and Example 1 described above, the width of the copper thin-film wire forming each of the coils CL1-1 and CL1-2 is increased while the thickness thereof is kept constant, so that the cross-sectional area of the copper thin-film wire is increased. However, as shown in an example in Fig. 8, the thickness of the copper thin-film wire may be gradually increased in the direction from the outermost circumferential end toward the innermost circumferential end of a coil of Modification 1-1, so that the cross-sectional area of the copper thin-film wire is gradually increased. In this case, a method for manufacturing the coil of Modification 1-1 having the configuration is as follows. As shown in Fig. 8, a copper thin-film wire pattern ET of a smaller thickness than the thickness required as the thickness of the innermost circumferential end is formed on the film BF1-2 for the coil, and the thickness (film thickness) of the copper thin-film wire pattern ET is gradually increased in the direction toward the innermost circumferential end by an electroplating technique by which current is applied to the wound copper thin-film wire pattern ET from the innermost circumferential end. By this manufacturing method, the plating P continuously becomes thinner in the direction from the inner circumferential side (see Fig. 8(a)) toward the outer circumferential side (Fig. 8(c)) (in other words, the plating P continuously becomes thicker in the direction from the outer circumferential side toward the inner circumferential side), as shown in the example in Fig. 8. Thus, the thickness of the coil of Modification 1-1 can be continuously increased in the direction from the outermost circumferential end toward the innermost circumferential end.

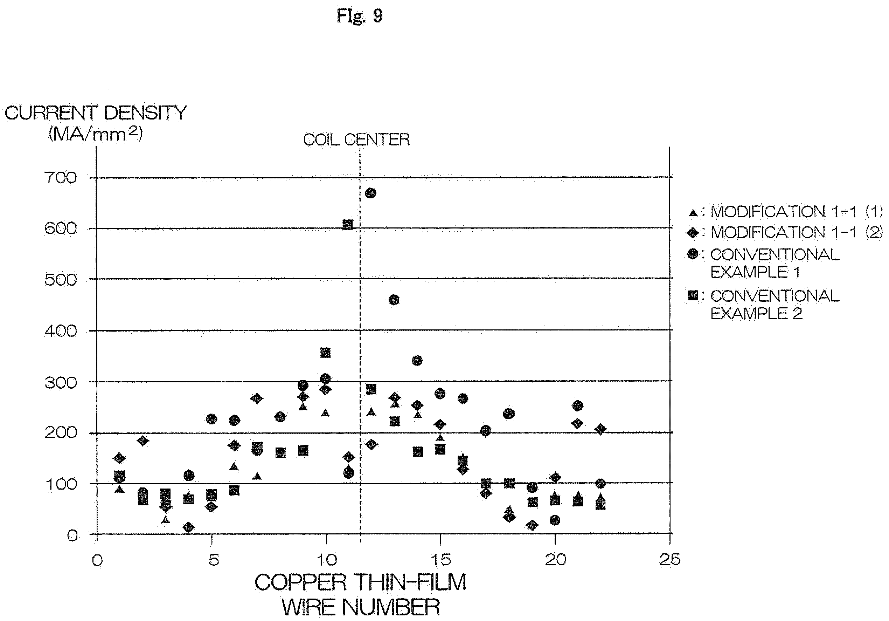

Here, the effects and the like to be achieved in a case where power transmission is performed with a power transmission system including the coil of Modification 1-1 are described, with reference to Fig. 9. Note that "copper thin-film wire numbers" in Fig. 9 has the same meaning as the "copper thin-film wire numbers" in Fig. 7. Also, in the coil of Modification 1-1 for obtaining the experimental results shown in Fig. 9, the width of the copper thin-film wire is entirely constant and identical, as opposed to the coils CL1-1 and CL1-2 for obtaining the experimental results shown in Fig. 7. However, the thicknesses of the copper thin-film wire portions adjacent to one another on the straight line connecting the via and an open end are varied by 0.055 mm, and are made greatest at the innermost circumferential end. The other specifications of the coil of modification 1-1 are the same as those of the coils CL1-1 and CL1-2 of the first embodiment. Further, the structural specifications of each of the two coils that have obtained the experimental results shown as the "conventional examples" in Fig. 9 are the same as the structural specifications of the two coils that have obtained the experimental results shown as the "conventional examples" in Fig. 7.

Here, as shown in Fig. 9, the thickness of the copper thin-film wire forming each coil of Modification 1-1 is continuously increased in the direction from the outermost circumferential end toward the innermost circumferential end. Thus, leveling of the current density in each entire coil of Modification 1-1 is achieved more effectively in the case of two examples of Modification 1-1 having the same structure (indicated by "▲" and "◆" in Fig. 9) than in the case of the two conventional examples having the same structure (indicated by "●" and "■" in Fig. 9).

According to Modification 1-1, the thickness of the copper thin-film wire of each coil of Modification 1-1 increases in the direction from the outermost circumferential end toward the innermost circumferential end, and accordingly, the cross-sectional area increases. Thus, it is possible to level the current density, while simplifying the process for manufacturing the coils.

Also, the cross-sectional area of the copper thin-film wire continuously increases in the direction from the outermost circumferential end toward the innermost circumferential end. Thus, the current density can be leveled without fail.

Further, as illustrated in Fig. 8, the thicker the copper thin-film wire, the shorter the distance between adjacent copper thin-film wire portions. Thus, resonance frequency can be lowered.

Note that the configuration of Modification 1-1 may be combined with the configuration of the first embodiment, so that both the thickness and the width of each coil are increased in the direction from the outermost circumferential end toward the innermost circumferential end. Thus, the cross-sectional area of the coil can be increased in the direction from the outermost circumferential end toward the innermost circumferential end.

### (ii) Modification 1-2

Next, Modification 1-2 is described. In the cases described above in the first embodiment and Example 1, the present invention is applied to a power transmission system including a power transmitting coil and/or a power receiving coil each including a loop coil and a two-layer open coil. However, the present invention can be applied not only to that, but also to a power transmission system including a power transmitting coil and/or a power receiving coil that do not include a loop coil, with a two-layer open coil being connected at the innermost circumferential end, the outermost circumferential portion of each open coil being a connection terminal. That is, the cross-sectional area of the copper thin-filmwire forming each open coil can be increased in the direction from the outermost circumferential end toward the innermost circumferential end. In this case, the same functions and effects as those of the power transmission system of each of the embodiments described above can also be achieved. Further, a power transmitting or power receiving coil can be formed only with such open coils.

### (iii) Modification 1-3

Lastly, Modification 1-3 is described. In the first embodiment and Example 1 described above, capacitors may be further connected in series or in parallel to the ends of the power-transmitting open coil or the power-receiving open coil having open ends. Thus, resonance frequency can be lowered.

### (B) Second Embodiment

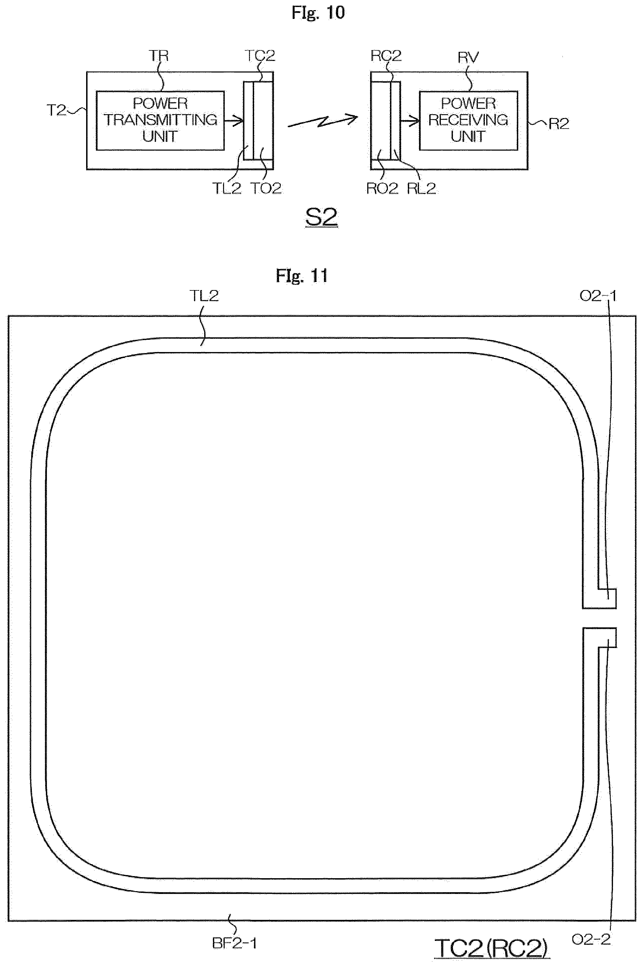

Next, a second embodiment of the present invention is described, with reference to Figs. 10 to 23. Note that the overall configuration and operation of a power transmission systemof the second embodiment, the layout of the power transmitting coil and the power receiving coil in the power transmission system, and the like are basically the same as the overall configuration and operation of the power transmission system S1 of the first embodiment, the layout of the power transmitting coil TC1 and the power receiving coil RC1 of the first embodiment, and the like. Therefore, of the components of a power transmission system of the second embodiment, the same components as those of the power transmission system S1 of the first embodiment are denoted by the same component numbers as those in the first embodiment, and detailed explanation thereof is not made herein.

### (I) Regarding the Overall Configuration and Operation of a Power Transmission System of the Second Embodiment

First, the overall configuration and operation of a power transmission system of the second embodiment is described, with reference to Fig. 10. Note that Fig. 10 is a block figure showing a schematic configuration of a power transmission system of the second embodiment.

As shown in Fig. 10, a power transmission system S2 of the second embodiment includes: a power reception apparatus R2 of the second embodiment including a power receiving unit RV and a power receiving coil RC2 of the second embodiment; and a power transmission apparatus T2 including a power transmitting unit TR and a power transmitting coil TC2 of the second embodiment. In this case, the relationship among the layout of the power reception apparatus R2 and the power transmission apparatus T2, the power transmission method, and the regulations or the like is the same as that with the power reception apparatus R1 and the power transmission apparatus T2 of the first embodiment, and therefore, detailed explanation thereof is not made herein.

Here, the power transmitting coil TC2 includes a power-transmitting loop coil TL2 and a power-transmitting open coil TO2. Also, the power receiving coil RC2 includes a power-receiving open coil RO2 and a power-receiving loop coil RL2. In this case, the electric power to be transmitted is input to the power-transmitting loop coil TL2 from the power transmitting unit TR. The power-transmitting open coil TO2 is then stacked concentrically on the power-transmitting loop coil TL2, and both ends thereof are open. On the other hand, the power-receiving open coil RO2 is positioned to face the power-transmitting open coil TO2, and both ends thereof are open. The power-receiving loop coil RL2 is then stacked concentrically on the power-receiving open coil RO2, and outputs electric power received from the power transmitting coil TC2 to the power receiving unit RV via the power-receiving open coil RO2 by a magnetic-field resonance method.

### (II) Structure of the Power Transmitting Coil TC2 (the Power Receiving Coil RC2)

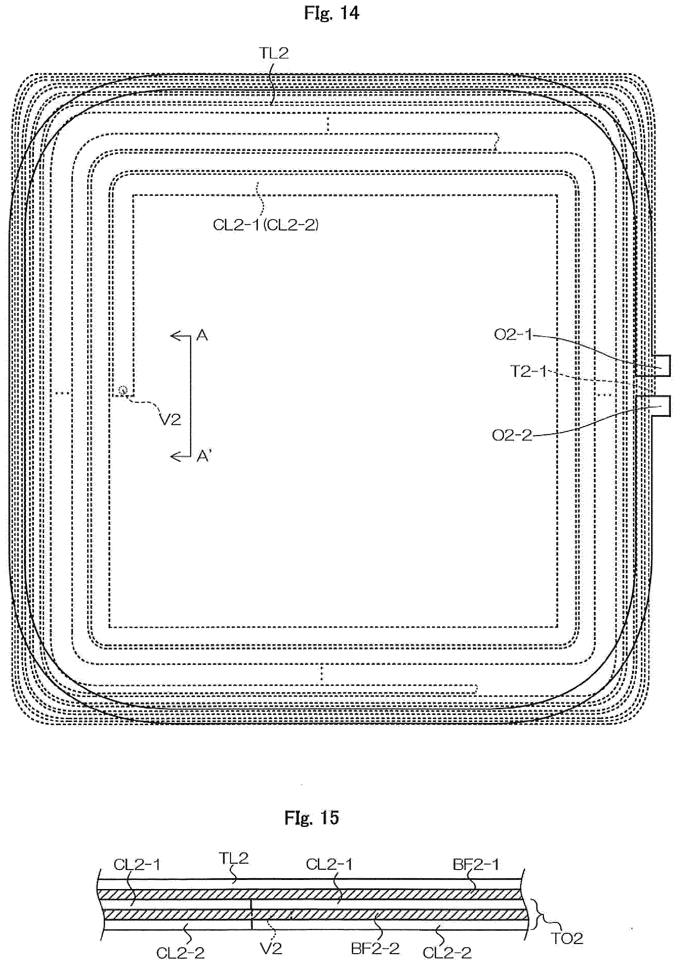

Next, the structures of the power transmitting coil TC2 and the power receiving coil RC2 of the second embodiment that are used in the above power transmission system S2 of the second embodiment are described, with reference to Figs. 11 to 15 . Note that the power transmitting coil TC2 and the power receiving coil RC2 of the second embodiment basically have the same structure. That is, the structure of the power-transmitting loop coil TL2 and the structure of the power-receiving loop coil RL2 are basically the same. Likewise, the structure of the power-transmitting open coil TO2 and the structure of the power-receiving open coil RO2 are basically the same. Further, the positional relationship between the power-transmitting loop coil TL2 and the power-transmitting open coil TO2 in the power transmitting coil TC2 is basically the same as the positional relationship between the power-receiving loop coil RL2 and the power-receiving open coil RO2 in the power receiving coil RC2. Therefore, in the description below, the structure of the power transmitting coil TC2 is described. Meanwhile, Figs. 11 to 14 are plan views of the structure of the power transmitting coil TC2 of the second embodiment, and Fig. 15 is a partial cross-sectional view of the structure of the power transmitting coil TC2 of the second embodiment. Note that Figs. 11 to 14 are plan views of the power transmission apparatus T2 in a case where the power transmitting coil TC2 is viewed from the side of the power transmitting unit TR.

As shown in the plan view in Fig. 11, the power transmitting coil TC2 of the second embodiment has a configuration in which the power-transmitting loop coil TL2 and the power-transmitting open coil TO2 not shown in Fig. 11 are stacked in the direction of the paper surface of Fig. 11, with an insulating film BF2-1 (described later in detail) being interposed in between. Further, the power-transmitting open coil TO2 has a configuration in which two coils CL2-1 and CL2-2, which will be described later, are stacked in the direction of the paper surface of Fig. 11, with an insulating film BF2-2 (described later in detail) being interposed in between. Note that the film BF2-1 and the film BF2-2 of the second embodiment may be formed with an insulating material such as a glass epoxy material, may be formed with a thin-film material in which ceramic particles or the like are dispersed, for example, and may be formed with an appropriate void retaining material, like the film BF1-1 of the first embodiment, and the like. Also, the centers of the windings of the copper thin-film wires (described later) that form the power-transmitting loop coil TL2, the coils CL2-1 and CL2-2 are the same or substantially the same as one another.

As shown in Fig. 11, the power-transmitting loop coil TL2 has a connection terminal 02-1 and a connection terminal O2-2 to be connected to the power transmitting unit TR on one side of the outermost circumferential portion thereof. Further, the power-transmitting loop coil TL2 is formed with a copper thin-film wire that is wound once (one turn), for example, and both ends (the center of the right side portion in the case shown in Fig. 11) of the copper thin-film wire are the connection terminal 02-1 and the connection terminal O2-2. Note that the copper thin-film wire forming the power-transmitting loop coil TL2 has the same width and the same thickness over the entire circumference of the power-transmitting loop coil TL2. Further, in the power-transmitting loop coil TL2, linear portions are formed on the upper side portion, the lower side portion, the left side portion, and the right side portion in Fig. 11, and the respective linear portions are connected by curved portions.

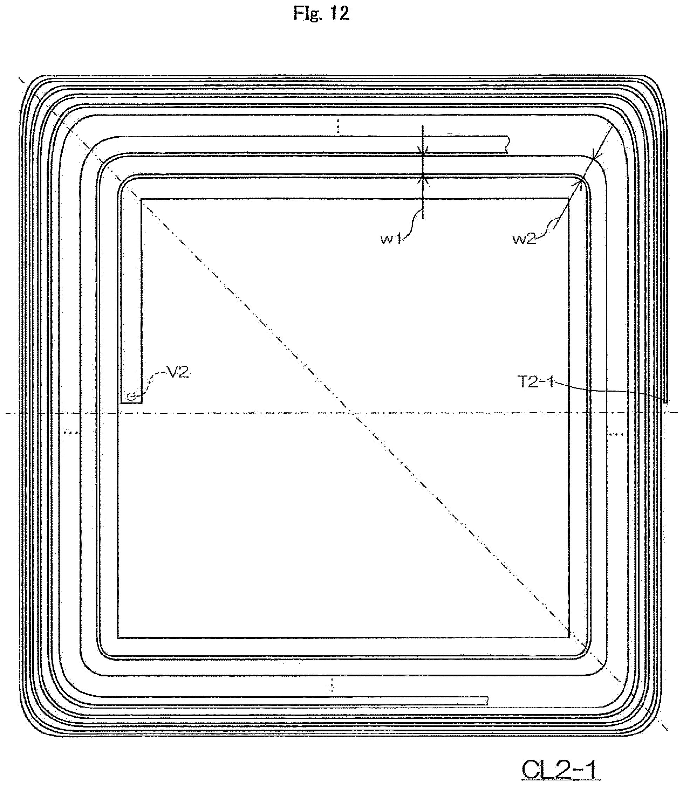

Next, the structure of the coil CL2-1 that is stacked immediately below the power-transmitting loop coil TL2 via the film BF2-1 and forms the power-transmitting open coil TO2 is described, with reference to Fig. 12. Note that Fig. 12 is a plan view showing only the coil CL2-1. Further, Fig. 12 does not show part of the winding of the copper thin-film wire forming the coil CL2-1, for clarity of the drawing.

As shown in Fig. 12, the coil CL2-1 forming the power-transmitting open coil TO2 of the second embodiment has an open end T2-1 at the outermost circumferential end. Here, the coil CL2-1 is formed with a copper thin-film wire that is spirally wound twenty and a half times (20.5 turns) counterclockwise from the outermost circumferential portion to the innermost circumferential portion, starting from the open end T2-1, for example. Further, a via V2 for forming an electrical connection with the coil CL2-2 stacked immediately below the coil CL2-1 in the direction of the paper surface of Fig. 12 is formed at the innermost circumferential portion. Note that the copper thin-film wire forming the coil CL2-1 has the same thickness over the entire circumference of the coil CL2-1, but its width is designed so as to become greater in the direction toward the inside of the coil CL2-1. Further, in the coil CL2-1, linear portions that are parallel to one another are formed on the upper side portion, the lower side portion, the left side portion, and the right side portion in Fig. 12, and the respective linear portions are connected to one another by curved portions that are substantially concentric arc-like portions. Furthermore, the width of the copper thin-film wire forming the coil CL2-1 is constant at the linear portions, and is designed so as to become greater in the direction toward the inside of the coil CL2-1 at the curved portions. In addition to this, in the coil CL2-1 of the second embodiment, the width w2 of at least a portion of the copper thin-film wire forming a curved portion included in one winding is greater than the width w1 of the copper thin-film wire forming a linear portion included in the one winding. In this case, the width w2 is preferably made greater than the width w1, so that the density of the current flowing in the copper thin-film wire forming the curved portion of the coil CL2-1 is leveled with respect to the density of the current flowing in the copper thin-film wire forming the linear portion. More specifically, the ratio between the width w2 and the width w1 is preferably almost the width of the curved portion : the width of the linear portion = 1.4 : 1, for example. This curved portion corresponds to an example of the "connecting portion" of the present invention.

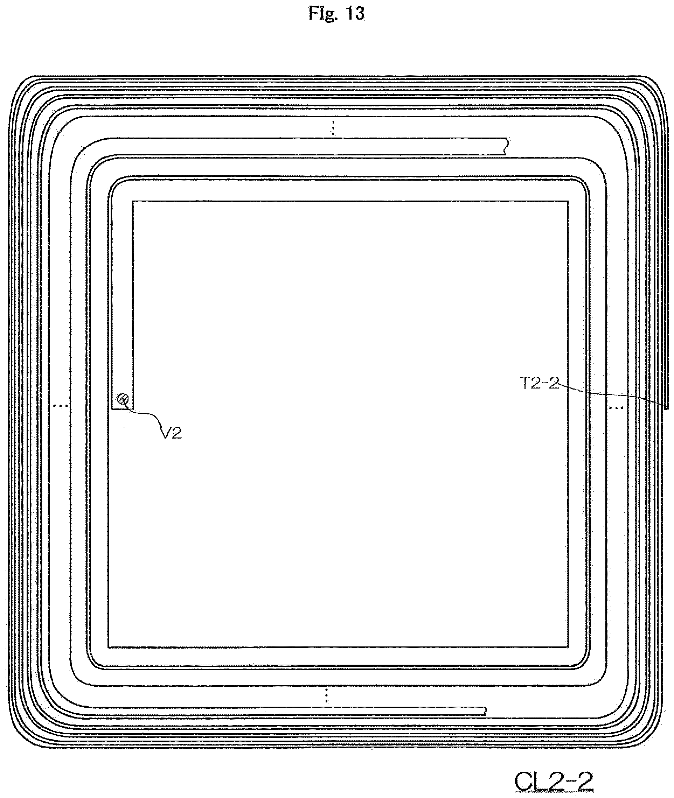

Next, the configuration of the coil CL2-2 that is stacked immediately below the coil CL2-1 via the film BF2-2 is described, with reference to Fig. 13. Note that Fig. 13 is a plan view showing only the coil CL2-2. Further, Fig. 13 does not show part of the winding of the copper thin-film wire forming the coil CL2-2, for clarity of the drawing.

As shown in Fig. 13, the coil CL2-2, which forms the power-transmitting open coil TO2 of the second embodiment together with the coil CL2-1, has the via V2 for forming an electrical connection with the coil CL2-1, and the via V2 is connected to the coil CL2-1 at its innermost circumferential portion. That is, the coil CL2-1 and the coil CL2-2 are connected in series. Here, the coil CL2-2 is formed with a copper thin-film wire that is spirally wound twenty and a half times (20.5 turns, which is the same number as that with the coil CL2-1) clockwise (which is the direction opposite of the coil CL2-1) from the innermost circumferential portion to the outermost circumferential portion, starting from the via V2, for example. Further, its outermost circumferential end is an open end T2-2. Note that the copper thin-film wire forming the coil CL2-2 has the same thickness over the entire circumference of the coil CL2-2, but its width is designed so as to become smaller in the direction toward the outside of the coil CL2-2. Further, in the coil CL2-2, linear portions that are parallel to one another are formed on the upper side portion, the lower side portion, the left side portion, and the right side portion in Fig. 13, and the respective linear portions are connected to one another by curved portions that are substantially concentric arc-like portions. Furthermore, the width of the copper thin-film wire forming the coil CL2-2 is constant at the linear portions, and is designed so as to become smaller in the direction toward the outside of the coil CL2-2 at the curved portions. In addition to this, in the coil CL2-2 of the second embodiment, the width of at least a portion of the copper thin-film wire forming a curved portion included in one winding is greater than the width of the copper thin-film wire forming a linear portion included in the one winding, as in the coil CL2-1. In this case, the width of the copper thin-film wire forming the curved portion is preferably made greater than the width of the copper thin-film wire forming the linear portion, so that the density of the current flowing in the copper thin-film wire forming the curved portion of the coil CL2-2 is leveled with respect to the density of the current flowing in the copper thin-film wire forming the linear portion. For example, the ratio between the width of the copper thin-film wire forming the curved portion and the width of the copper thin-film wire forming the linear portion is preferably almost 1.4 : 1. This curved portion also corresponds to an example of the "connecting portion" of the present invention.

Here, regarding the positional relationship between the copper thin-film wires forming the coil CL2-1 and the coil CL2-2, the respective copper thin-film wires are wound so that the position of the copper thin-film wire of the coil CL2-1 wound in the counterclockwise direction coincides with the position of the copper thin-film wire of the coil CL2-2 wound in the clockwise direction when viewed from the center of the winding of each of the coils CL2-1 and CL2-2 . The coil CL2-1 and the coil CL2-2 are then connected in series by the via V2 connected to the innermost circumferential portion of each of the coils. Accordingly, the winding from the outermost circumferential portion to the innermost circumferential portion of the coil CL2-1 is turned back (folded back) in the opposite direction at the innermost circumferential portion, so that the coil CL2-2 is wound from the innermost circumferential portion to the outermost circumferential portion.

Next, the positional relationship between the copper thin-film wires forming the power-transmitting loop coil TL2 and the power-transmitting open coil TO2 (which are the coil CL2-1 and the coil CL2-2) is described, with reference to Fig. 14. Note that Fig. 14 is a plan view showing an overlapping state of the power-transmitting loop coil TL2 and the coils CL2-1 and CL2-2. In Fig. 14, the power-transmitting loop coil TL is indicated by a solid line, and each of the coils CL2-1 and CL2-2 of the power-transmitting open coil TO2 stacked immediately below the power-transmitting loop coil TL2 via the film BF2-1 (not shown in Fig. 14) is indicated by a dashed line. Note that the positional relationship between the copper thin-film wires forming the coils CL2-1 and CL2-2 is exactly the same in Fig. 14.

As indicated by a dashed line in Fig. 14, in the coil CL2-1 that is wound from the outer circumference toward the inner circumference, and is connected to the coil CL2-2 by the via V2 at the innermost circumferential portion, the copper thin-film wire is wound while the respective curved portions are formed so that the position of each linear portion shifts inward by the amount equivalent to a quarter of the pitch in the winding of the copper thin-film wire, for each quarter of the winding. On the other hand, as indicated by the solid line in Fig. 14, the power-transmitting loop coil TL2 is stacked along the outer edge of the coil CL2-1, and the connection terminal 02-1 and the connection terminal O2-2 each protrude outward from the winding.

As shown in Fig. 14 described above, in the power transmitting coil TC2 in which the power-transmitting loop coil TL2 and the coils CL2-1 and CL2-2 of the power-transmitting open coil TO2 are stacked, the respective copper thin-film wires forming the power-transmitting loop coil TL2 and the power-transmitting open coil TO2 (the coils CL2-1 and CL2-2) are stacked so as to substantially overlap with each other on each of the upper, lower, left, and right sides.

Next, the stacked state of the power-transmitting loop coil TL2 and the coils CL2-1 and CL2-2, and the connection state of the coil CL2-1 and the coil CL2-2 are described, with reference to Fig. 15, which is a cross-sectional view taken along the line A-A' defined in Fig. 14.

As shown in Fig. 15, in the left side portion in Figs. 11 to 14, the coil CL2-1 and the coil CL2-2 are stacked, with the film BF2-2 being interposed in between, and the respective components are electrically connected by the via V2. At the position of the via V2, the counterclockwise winding of the coil CL2-1 is turned back (folded back), to form the clockwise winding of the coil CL2-2. Meanwhile, the power-transmitting open coil TO2 formed with the coils CL2-1 and CL2-2, and the power-transmitting loop coil TL2 are stacked, with the film BF2-1 (see Fig. 11) being interposed in between.

### (III) Method for Manufacturing the Power Transmitting Coil TC2 and the Power Receiving Coil RC2

Next, a method for manufacturing the power transmitting coil TC2 and the power receiving coil RC2 of the second embodiment is described.

The manufacturing method may be a first manufacturing method that is basically the same as a conventional method and includes steps (a)-1 to (a)-11 described below, or may be a second manufacturing method or the like including steps (b) -1 to (b) -12 described below.

### (a) First Manufacturing Method

(a)-1: A copper thin film is formed on both entire surfaces of the film BF2-2.
(a)-2: Resist is applied onto each of the copper thin films (both sides) formed in (a)-1.
(a) -3: The resist applied in (a)-2 is subjected to patterning, to form the copper thin-film wires of the coils CL2-1 and CL2-2 on the respective surfaces. Here, patterning is performed so that the width of the copper thin-film wire forming the coil CL2-1 (coil CL2-2) of the second embodiment (which is the width of the copper thin-film wire in the entire coil CL2-1 (or the coil CL2-2) becomes greater in the direction from the open end T2-1 (or the open end T2-2) at the outermost circumferential end of the coil CL2-1 (or the coil CL2-2) toward the portion to which the via V2 is connected at the innermost circumferential portion, as described above. In addition to this, patterning is performed so that the width of the copper thin-film wire at a curved portion of the coil CL2-1 (or the coil CL2-2) (see reference numeral "w2" in Fig. 12) becomes greater than the width of the copper thin-film wire at a linear portion in the same winding (see reference numeral "w1" in Fig. 12) .
(a)-4: Etching is performed after the patterning in (a)-3, to form the copper thin-film wires as the coils CL2-1 and CL2-2.
(a)-5: The via V2 is formed, to complete the power-transmitting open coil TO2.
(a)-6: A copper thin film is formed on an entire surface of the film BF2-1.
(a)-7: Resist is applied onto the copper thin film formed in (a)-6.
(a)-8: Patterning is performed on the resist applied in (a)-7, to form the copper thin-film wire of the power-transmitting loop coil TL2.
(a)-9: Etching is performed after the patterning in (a)-8, to form the copper thin-film wire as the power-transmitting loop coil TL2.
(a)-10: The power-transmitting open coil TO2 of (a)-5 and the power-transmitting loop coil TL2 of (a)-9 are bonded to each other, to form the power transmitting coil TC2.
(a)-11: The connection terminal 02-1 and the connection terminal O2-2 are connected to the power transmitting unit TR (in the case of the power transmission apparatus T2) or to the power receiving unit RV (in the case of the power reception apparatus R2) .

### (b) Second Manufacturing Method

(b)-1: A copper thin film is formed on both entire surfaces of the film BF2-2.
(b)-2: A through hole is formed with a laser or the like at the position corresponding to the via V2.
(b)-3: Copper plating processing is performed on the entire film including the through hole by an electroless copper plating method and an electrolytic copper plating method, to form the via V2.
(b)-4: Resist is applied onto the copper plating (both sides) formed in (b)-3.
(b)-5: The resist applied in (b) -4 is subjected to patterning, to form the copper thin-film wires of the coils CL2-1 and CL2-2. Here, patterning is performed so that the width of the copper thin-film wire forming the coil CL2-1 (coil CL2-2) becomes greater in the direction from the open end T2-1 (or the open end T2-2) at the outermost circumferential end of the coil CL2-1 (or the coil CL2-2) toward the portion to which the via V2 is connected at the innermost circumferential portion, as in (a)-3. In addition to this, patterning is performed so that the width of the copper thin-film wire at a curved portion of the coil CL2-1 (or the coil CL2-2) (see reference numeral "w2" in Fig. 12) becomes greater than the width of the copper thin-film wire at a linear portion in the same winding (see reference numeral "w1" in Fig. 12), in the same manner as in (a)-3.
(b)-6: Etching is performed after the patterning in (b)-5, to form the copper thin-film wires as the coils CL2-1 and CL2-2 and complete the power-transmitting open coil TO2.
(b)-7: A copper thin film is formed on an entire surface of the film BF2-1.
(b)-8: Resist is applied onto the copper thin film formed in (b)-7.
(b) -9: Patterning is performed on the resist applied in (b)-8, to form the copper thin-film wire of the power-transmitting loop coil TL2.
(b)-10: Etching is performed after the patterning in (b)-9, to form the copper thin-film wire as the power-transmitting loop coil TL2.
(b)-11: The power-transmitting open coil TO2 of (b)-6 and the power-transmitting loop coil TL2 of (b)-10 are bonded to each other, to form the power transmitting coil TC2.
(b)-12: The connection terminal 02-1 and the connection terminal O2-2 are connected to the power transmitting unit TR (in the case of the power transmission apparatus T2) or to the power receiving unit RV (in the case of the power reception apparatus R2) .

### Example 2

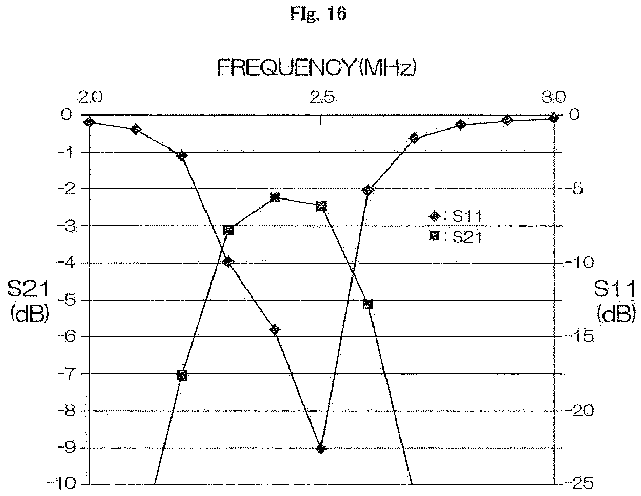

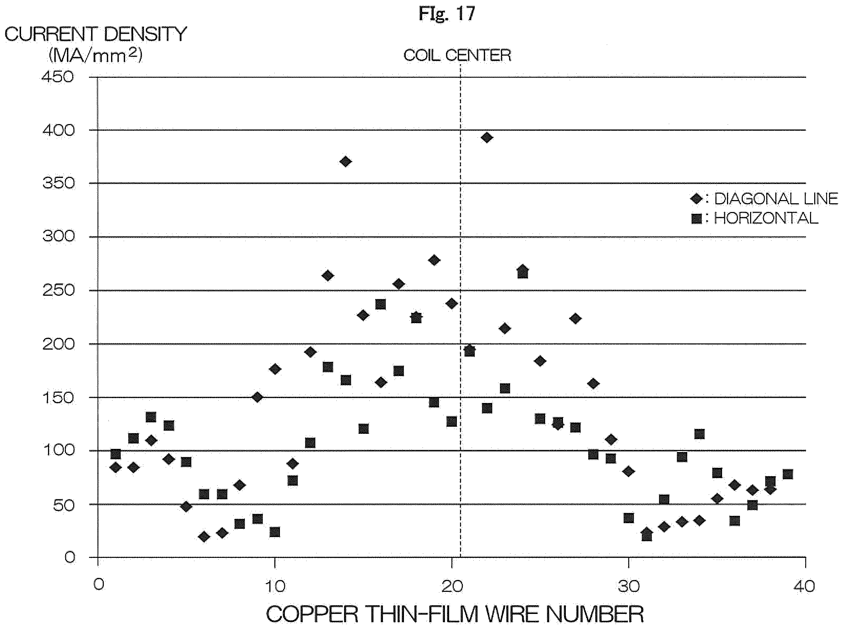

Next, the effects and the like to be achieved in a case where power transmission is performed with the power transmission system S2 of the second embodiment including the power transmitting coil TC2 and the power receiving coil RC2 of the second embodiment are described on the basis of the results of experiments conducted by the inventor of the present invention, with reference to Figs. 16 and 17. Note that Fig. 16 is a graph showing the relationship between reflection/transmission efficiency and frequency, as the effects of the structure of a coil of the second embodiment. Fig. 17 is a graph showing the relationship between copper thin-film wire numbers and current density, as the effects of the structure of a coil of the second embodiment. Here, the number of windings of the power-transmitting open coil TO2 or the power-receiving open coil RO2 having the effects shown in Fig. 17 is twenty and a half (20.5 turns) as described above. The "copper thin-film wire numbers" in Fig. 17 corresponding to the structure are assigned to the copper thin-film wire portions existing on the straight line (see a dot-and-dash line in Fig. 12) connecting the open end T2-1 (open end T2-2) of the power-transmitting open coil TO2 or the power-receiving open coil RO2 to a point in the vicinity of the via V2 (the number of the copper thin-film wire portions is 40, because the number of windings is twenty and a half). The number for the copper thin-film wire portion located at the outermost circumferential portion on the side of the via V2 is "1", and the number for the copper thin-film wire portion located at the outermost circumferential portion on the side of the open end T2-1 (open end T2-2) is "40". In this order, numbers are assigned. Further, the respective structural specifications of the coils CL2-1 and CL2-2 of the second embodiment, which have obtained the experimental results shown in Fig. 17, are as follows.
- Each outer dimension of the power-transmitting open coil TO2 and the power-receiving open coil RO2 in the planes shown in Figs. 11 to 14: about 100 mm long × about 100 mm wide
- The thicknesses of the copper thin-film wires of the coils CL2-1 and CL2-2: entirely constant and identical
- The number of windings of the copper thin-film wires of the coils CL2-1 and CL2-2: twenty and a half
- The distance between adjacent copper thin-film wire portions: 0.6 mm for both of the coils CL2-1 and CL2-2
- The relationship between the widths of the copper thin-film wire at a linear portion and a curved portion: the width of the linear portion : the width of the curved portion = 1 : 1.4

Meanwhile, in Fig. 17, the current density in the copper thin-film wire existing on the straight line (see the dot-and-dash line in Fig. 12) connecting the open end T2-1 (open end T2-2) and the via V2 is shown as **"■:** horizontal", and the current density in a copper thin-film wire existing on a straight line (see a double-dot-and-dash line in Fig. 12) connecting the center of the coil CL2-1 (or the coil CL2-2) and the center of a curved portion (a corner) on a diagonal line is shown as "◆: diagonal line".

First, as shown in Fig. 16, in a case where wireless power transmission is performed with the power transmission system S2 of the second embodiment including the power transmitting coil TC2 and the power receiving coil RC2 of the second embodiment, the S parameter indicating transmission efficiency (S21) has the optimum value at the frequency of 2.4 MHz, while the S parameter indicating reflectance (S11) has the optimum value at the frequency of 2.5 MHz.

On the other hand, as shown in Fig. 17, the current density in the copper thin-film wire portions existing on the straight line connecting the open end T2-1 (open end T2-2) and the via V2 (see the **■**marks in Fig. 17), and the current density in the copper thin-film wire portions existing on the straight line connecting the center of the coil CL2 -1 (or the coil CL2-2) and the center of a curved portion (a corner) on a diagonal line (see the ◆ marks in Fig. 17) are both substantially leveled in the entire coils CL2-1 and CL2-2.

As described above, in power transmission using the power transmission system S2 of the second embodiment including the power transmitting coil TC2 and the power receiving coil RC2 of the second embodiment, the width of the copper thin-film wire forming a curved portion of the coil CL2-1 (or the coil CL2-2) is greater than the width of the copper thin-film wire forming a linear portion. Accordingly, the cross-sectional area is made larger at the curved portions having higher current densities in the copper thin-film wire, so that the current density is leveled. Thus, the degree of freedom in arrangement of the coil CL2-1 (or the coil CL2-2) and the efficiency of use of the wound wire material can be increased, and heat generation from the power transmitting coil TC2 (or the power receiving coil RC2) can be reduced.

Also, the width of the copper thin-film wire forming a curved portion of the coil CL2-1 (or the coil CL2-2) is made greater than the width of the copper thin-film wire forming a linear portion, so that the density of the current flowing in the copper thin-film wire forming the curved portion is leveled with respect to the density of the current flowing in the copper thin-film wire forming the linear portion. Thus, leveling of current density can be more effectively performed.

Further, the width of the copper thin-film wire forming a curved portion of the coil CL2-1 (or the coil CL2-2) is made greater than the width of the copper thin-film wire forming a linear portion, so that current density is leveled. Thus, the leveling can be achieved through a simplified manufacturing process.

Furthermore, the power-transmitting open coil TO2 has a series connection in which the coil CL2-1 and the coil CL2-2 are stacked and connected. Thus, it is possible to achieve both adjustment of resonance frequency and leveling of current density.

Also, each of the copper thin-filmwires forming the respective coils CL2-1 and CL2-2 is a thin-film wire that is flat in the radial direction of the power transmitting coil TC2 (or the power receiving coil RC2). Thus, the resonance frequency of the entire power transmitting coil TC2 (or the entire power receiving coil RC2) can be adjusted.

### Modification 2

Next, Modification 2 of the present invention is described.

### (i) Modification 2-1

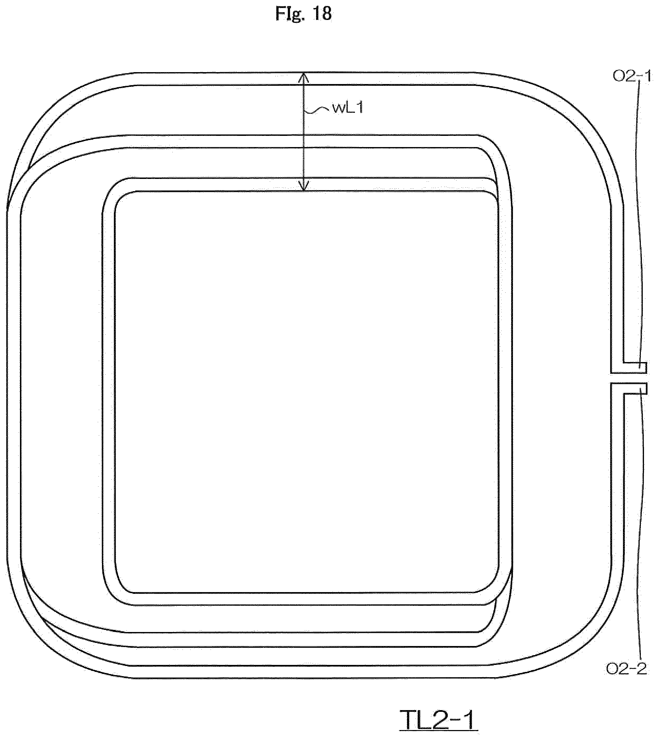

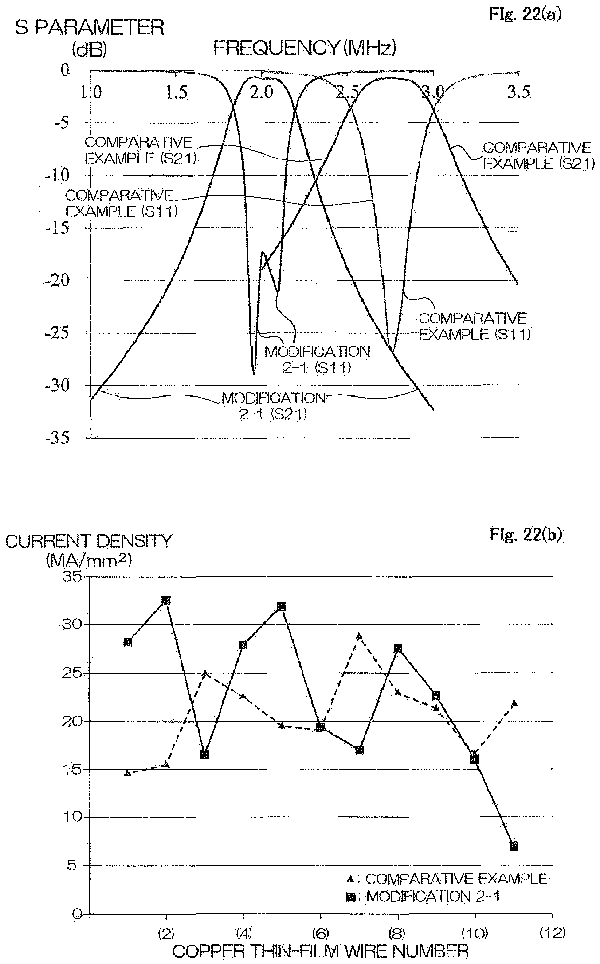

First, Modification 2-1 is described, with reference to Figs. 18 to 22. Note that Figs. 18 to 21 are plan views and the like showing the structure of a coil of Modification 2-1. Fig. 22 is graphs showing the effects of the structure of the coil. Note that, in Figs. 18 to 22, the same components as the components of the second embodiment and Example 2 described above are denoted by the same component numbers as those in the second embodiment and Example 2, and detailed explanation thereof is not made herein.

Specifically, in Modification 2-1, only the cross-sectional area of the copper thin-film wire forming part of a curved portion of the coil CL2-1 (or the coil CL2-2) of the above second embodiment and Example at a portion that is in the vicinity or not in the vicinity of the center in the radial direction may be made larger than the cross-sectional area of the copper thin-film wire forming a linear portion, for example. In this case, the density of the current flowing in the copper thin-film wire can be effectively leveled.

Referring now to Figs. 18 to 21, the structures of a power transmitting coil and a power receiving coil of Modification 2-1 are described in greater detail. Note that, in the description below, the structure of the power transmitting coil of Modification 2-1 is described in the same manner as in the case with the power transmitting coil TC2 and the power receiving coil RC2 of the second embodiment. Also, note that Figs. 18 to 21 are plan views of the power transmitting coil of Modification 2-1 as viewed from the side of the power transmitting unit of Modification 2-1 in a power transmission apparatus of Modification 2-1.

As shown in the plan view in Fig. 18, the power transmitting coil of Modification 2-1 has a configuration in which a power-transmitting loop coil TL2-1 and a power-transmitting open coil of Modification 2-1 that is not shown in Fig. 18 are stacked in the direction of the paper surface of Fig. 18, with the same insulating film (not shown in Fig. 18) as the film BF2-1 of the second embodiment being interposed in between. Also, the power-transmitting open coil of Modification 2-1 has a configuration in which two coils CL2-11 and CL2-12 described later are stacked in the direction of the paper surface of Fig. 18, with the same insulating film as the film BF2-1 of the second embodiment.

Further, as shown in Fig. 18, the power-transmitting loop coil TL2-1 has a connection terminal 02-1 and a connection terminal O2-2 that are the same as those of the second embodiment, on one side of the outermost circumferential portion. Here, the power-transmitting loop coil TL2-1 is formed with a copper thin-film wire that is wound three times (three turns), for example, and both ends (the center of the right side portion in the case shown in Fig. 18) of the copper thin-film wire are the connection terminal O2-1 and the connection terminal O2-2. Note that the copper thin-film wire forming the power-transmitting loop coil TL2-1 has the same width and the same thickness over the entire circumference of the power-transmitting loop coil TL2-1. Further, in the power-transmitting loop coil TL2-1, linear portions are formed on the upper side portion, the lower side portion, the left side portion, and the right side portion in Fig. 18, and the respective linear portions are connected by curved portions. Furthermore, in the power-transmitting loop coil TL2-1, overlapping portions of the copper thin-film wire forming the power-transmitting loop coil TL2-1 are insulated from each other, as a jumper line is used so that one of the overlapping portions crosses over the other, for example.

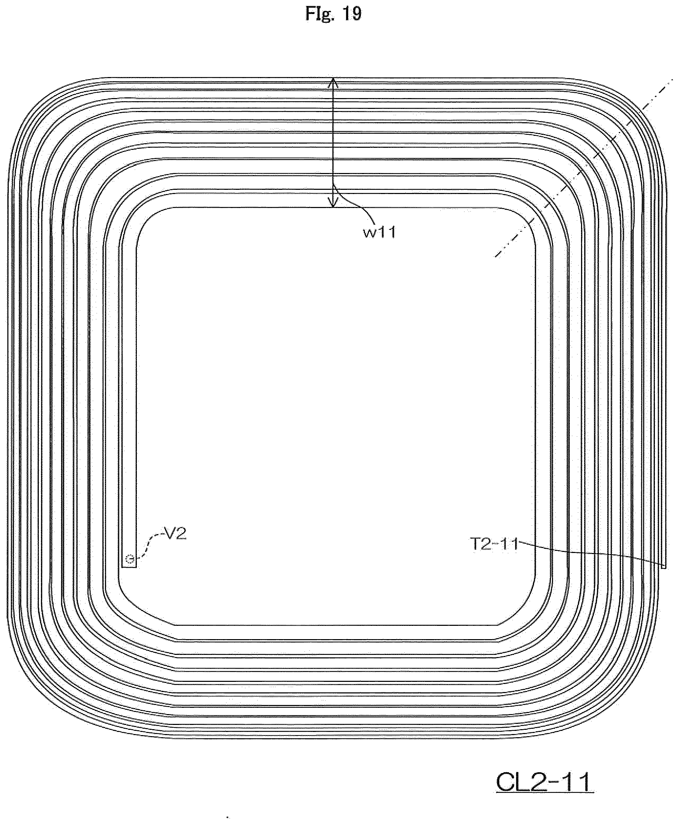

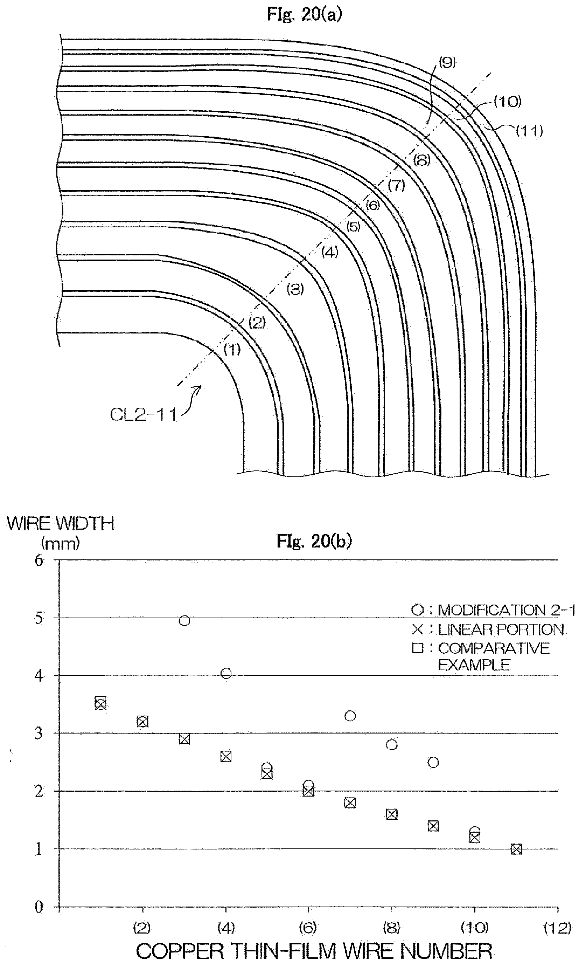

Next, the structure of the coil CL2-11 that is stacked immediately below the power-transmitting loop coil TL2-1 via the film and forms the power-transmitting open coil of Modification 2-1 is described, with reference to Figs. 19 and 20. Note that Fig. 19 is a plan view showing only the coil CL2-11, and Fig. 20 is an enlarged plan view showing only one corner of the coil CL2-11.

As shown in Fig. 19, the coil CL2-11 forming the power-transmitting open coil of Modification 2-1 has an open end T2-11 at the outermost circumferential end. Here, the coil CL2-11 is formed with a copper thin-film wire that is spirally wound almost ten and a half times (almost 10.5 turns) counterclockwise from the outermost circumferential portion to the innermost circumferential portion, starting from the open end T2-11, for example. Further, a via V2 for forming an electrical connection with the coil CL2-12 stacked immediately below the coil CL2-11 in the direction of the paper surface of Fig. 19 is formed at the innermost circumferential portion. Note that the copper thin-film wire forming the coil CL2-11 has the same thickness over the entire circumference of the coil CL2-11, but its width is designed so as to become greater in the direction toward the inside of the coil CL2-11. Further, in the coil CL2-11, linear portions that are parallel to one another are formed on the upper side portion, the lower side portion, the left side portion, and the right side portion in Fig. 19, and the respective linear portions are connected to one another by curved portions that are substantially concentric arc-like portions. Furthermore, the width of the copper thin-film wire forming the coil CL2-11 is constant at the linear portions, and the width of the copper thin-film wire at part of the coil CL2-11 in the radial direction is greater than the width of the copper thin-film wire at the other portions in the curved portions. In this case, the width of the copper thin-film wire forming each curved portion of the coil CL2-11 is preferably such a width that the density of the current flowing in the copper thin-film wire forming the curved portion is leveled with respect to the density of the current flowing in the copper thin-film wire forming the linear portions of the coil CL2-11, as in the case of the second embodiment.

More specifically, as shown in Fig. 20(a), which is an enlarged view of curved portions accompanied by a double-dot-and-dash line, the respective copper thin-film wire portions in the coil CL2-11 are designed so that the widths of the third, fourth, seventh, eighth, and ninth copper thin-film wire portions at the upper right portion in Fig. 19 are greater than the widths of the other copper thin-film wire portions (which are the first, second, fifth, sixth, tenth, and eleventh copper thin-film wire portions in this order from the inner side), whose values are shown as specific example values in Fig. 20(b), for example. Note that, as indicated by the cross marks in Fig. 20(b), the width of the copper thin-film wire at the linear portions of the coil CL2-11 is made gradually greater in the direction toward the inside. Further, in Fig. 20(b), the first, second, fifth, sixth, tenth, and eleventh copper thin-film wire portions counted from the inside at the curved portions shown in Fig. 20(a) have widths corresponding to the copper thin-film wire portions at the corresponding linear portions. Further, the □ marks in Fig. 20(b) indicate a comparative example of the widths of the copper thin-film wire portions at the curved portions of a coil to be compared with the effects of a later described example of Modification 2-1, and show that the copper thin-film wire is formed so as to become wider in the direction toward the inside, like the copper thin-film wire at the corresponding linear portions.

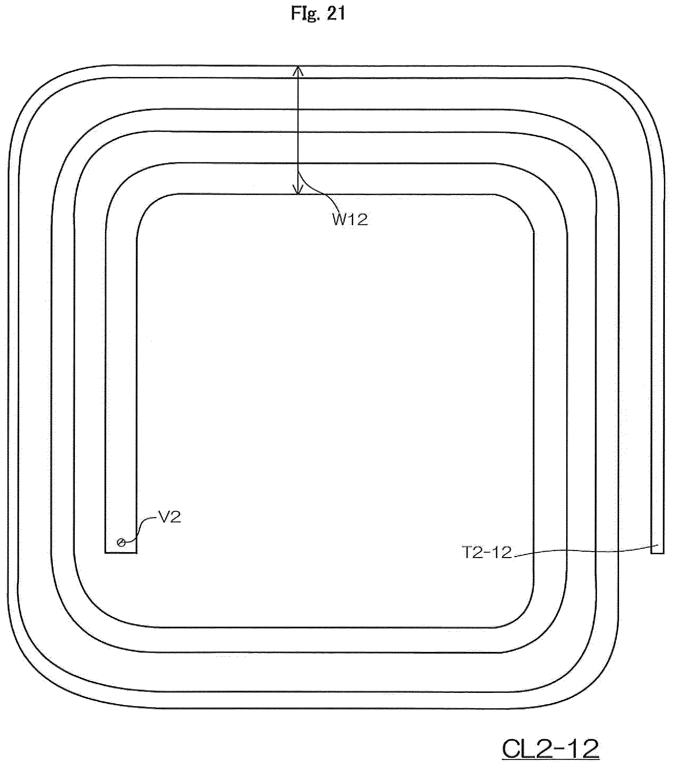

Next, the configuration of the coil CL2-12 that is stacked immediately below the coil CL2-11 is described, with reference to Fig. 21. Note that Fig. 21 is a plan view showing only the coil CL2-12.

As shown in Fig. 21, the coil CL2-12, which forms the power-transmitting open coil of Modification 2-1 together with the coil CL2-11, has the via V2 for forming an electrical connection with the coil CL2-11, and the via V1 is connected to the coil CL2-12 at its innermost circumferential portion. That is, the coil CL2-11 and the coil CL2-12 are connected in series, as in the case of the second embodiment. Here, the coil CL2-12 is formed with a copper thin-film wire that is spirally wound about two and a half times (about 2.5 turns) clockwise (which is the direction opposite of the coil CL2-11) from the innermost circumferential portion to the outermost circumferential portion, starting from the via V2, for example. Further, its outermost circumferential end is an open end T2-12. Note that the copper thin-film wire forming the coil CL2-12 has the same thickness over the entire circumference of the coil CL2-12, but its width is designed so as to become smaller in the direction toward the outside of the coil CL2-12. Further, in the coil CL2-12, linear portions that are parallel to one another are formed on the upper side portion, the lower side portion, the left side portion, and the right side portion in Fig. 21, and the respective linear portions are connected to one another by curved portions that are substantially concentric arc-like portions. Furthermore, the width of the copper thin-film wire forming the coil CL2-12 is constant at the linear portions, and is designed so as to become smaller in the direction toward the outside of the coil CL2-12 at the curved portions. Note that, unlike those in the coil CL2-11, the widths of the copper thin-film wire portions forming the curved portions of the coil CL2-12 of the Modification 2-1 are designed to become simply smaller in the direction toward the outside.

Here, regarding the positional relationship between the copper thin-film wires forming the coil CL2-11 and the coil CL2-12, the respective copper thin-film wires are wound so that the position of the copper thin-film wire of the coil CL2-11 wound in the counterclockwise direction coincides with the position of the copper thin-film wire of the coil CL2-12 wound in the clockwise direction when viewed from the center of the winding of each of the coils CL2-11 and CL2-12. The coil CL2-11 and the coil CL2-12 are then connected in series by the via V2 connected to the innermost circumferential portion of each of the coils. Accordingly, the winding from the outermost circumferential portion to the innermost circumferential portion of the coil CL2-11 is turned back (folded back) in the opposite direction at the innermost circumferential portion, so that the coil CL2-12 is wound from the innermost circumferential portion to the outermost circumferential portion. Also, the width (indicated by reference numeral "w11" in Fig. 19) of an entire side of the coil CL2-11 is made substantially equal to the width (indicated by reference numeral "wL1" in Fig. 18) of the entire corresponding side of the power-transmitting loop coil TL2-1, and the width (indicated by "w12" in Fig. 21) of the entire corresponding side of the coil CL2-12.

Next, the positional relationship between the copper thin-film wires forming the power-transmitting loop coil TL2-1 and the power-transmitting open coil (which are the coil CL2-11 and the coil CL2-12) of Modification 2-1 is described. First, in the coil CL2-11 that is wound from the outer circumference toward the inner circumference, and is connected to the coil CL2-12 by the via V2 at the innermost circumferential portion, the copper thin-film wire is wound while the respective curved portions are formed so that the position of each linear portion shifts inward by the amount equivalent to a quarter of the pitch in the winding of the copper thin-film wire, for each quarter of the winding. Meanwhile, in the coil CL2-12 that is wound from the inner circumference toward the outer circumference, and is connected to the coil CL2-11 by the via V2 at the innermost circumferential portion, the copper thin-film wire is wound while the respective curved portions are formed so that the position of each linear portion shifts outward by the amount equivalent to a quarter of the pitch in the winding of the copper thin-film wire, for each quarter of the winding. On the other hand, the power-transmitting loop coil TL2-1 is stacked along the copper thin-film wire portion of the coil CL2-11, and the connection terminal 02-1 and the connection terminal O2-2 each protrude outward from the winding. Accordingly, in the power transmitting coil of Modification 2-1 in which the power-transmitting loop coil TL2-1 and the coils CL2-11 and CL2-12 are stacked, the respective copper thin-film wires forming the power-transmitting loop coil TL2-1 and the coils CL2-11 and CL2-12 are stacked so as to substantially overlap with each other on each of the upper, lower, left, and right sides.

Next, the effects and the like to be achieved in a case where power transmission is performed with the power transmission system of Modification 2-1 including the power transmitting coil and the power receiving coil of Modification 2-1 are described as an example of Modification 2-1, on the basis of the results of experiments conducted by the inventor of the present invention, with reference to Fig. 22. Note that Fig. 22 (a) is a graph showing the relationship between reflection/transmission efficiency and frequency, as the effects of the structure of a coil of Modification 2-1. Fig. 22 (b) is a graph showing the relationship between copper thin-film wire numbers and current density (the average value of the current densities in the vicinities of the centers of the respective copper thin-film wire portions forming the curved portions), as the effects of the structure of the coil of Modification 2-1. Here, the structure of the power-transmitting open coil or the power-receiving open coil of Modification 2-1 that have obtained the effects shown in Fig. 22 is the same as the structure shown in Figs. 18 to 21, and the "copper thin-film wire numbers" in Fig. 22(b) corresponding to the structure are the same numbers as the copper thin-film wire numbers shown in Fig. 20(b). On the other hand, in the comparative examples shown in Fig. 22, the width of the copper thin-film wire at a curved portion is the same as the width of the corresponding linear portion (see Fig. 20(b)). Other than that, the structures of power transmitting coils and power receiving coils of the comparative examples are the same as those of the power transmitting coil and the power receiving coil of Modification 2-1.

First, as shown in Fig. 22(a), in a case where wireless power transmission is performed with the power transmission system of Modification 2-1 including the power transmitting coil and the power receiving coil of Modification 2-1, the S parameter indicating transmission efficiency (S21) shifts to a lower frequency than those in the comparative examples, while the S parameter indicating reflectance (S11) is more improved than those in the comparative examples.

On the other hand, as shown in Fig. 22(b), the current densities in the respective copper thin-film wire portions of the coil CL2-11 of Modification 2-1 (see the ■ marks in Fig. 22(b)) is leveled substantially in the entire coil more effectively than the current densities in the respective copper thin-film wire portions of the coil of a comparative example (see the A marks in Fig. 22(b)).

Note that, in the structures of the power transmitting coil and the power receiving coil of Modification 2-1, the number of windings of the copper thin-film wire in the coil CL2-12 is smaller than the number of windings of the copper thin-film wire in the coil CL2-11. Accordingly, the effect to facilitate adjustment of the resonance frequencies of the power transmitting coil and the power receiving coil of Modification 2-1 can also be achieved, for example.

### (ii) Modification 2-2

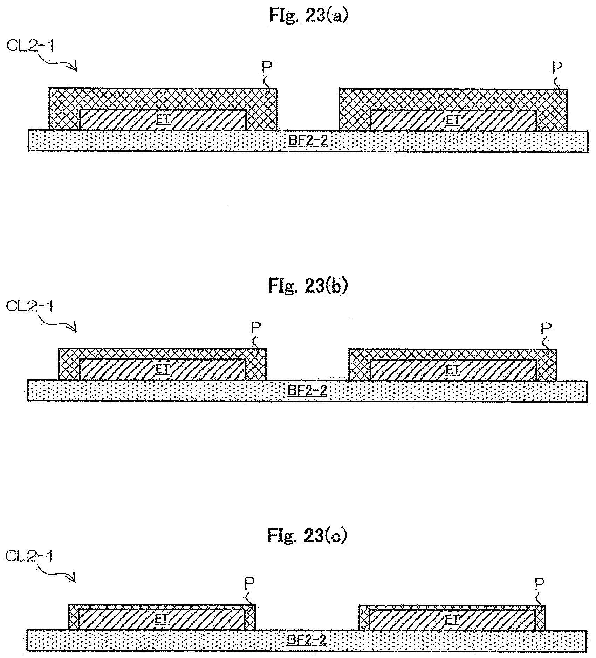

Next, Modification 2-2 is described, with reference to Fig. 23. Note that Fig. 23 is a figure illustrating an example method for manufacturing coils of Modification 2-2.

Specifically, in the second embodiment and Example 2 described above, the width of the copper thin-film wire forming each of the coils CL2-1 and CL2-2 is increased while the thickness thereof is kept constant, so that the cross-sectional area of the copper thin-film wire is increased. However, as shown in an example in Fig. 23, the thickness of the copper thin-film wire may be gradually increased in the direction from the outermost circumferential end toward the innermost circumferential end of a coil of Modification 2-1, so that the cross-sectional area of the copper thin-film wire is gradually increased, and the thicknesses at the curved portions are further increased. In this case, a method for manufacturing the coil of Modification 2-1 having the configuration is as follows. As shown in Fig. 23, a copper thin-film wire pattern ET of a smaller thickness than the thickness required as the thickness of the innermost circumferential end is formed on the film BF2-2 for the coil, and the thickness (film thickness) of the copper thin-film wire pattern ET is gradually increased in the direction toward the innermost circumferential end by an electroplating technique by which current is applied to the wound copper thin-film wire pattern ET from the innermost circumferential end. By this manufacturing method, the plating P becomes thinner in the direction from the inner circumferential side (see Fig. 23(a)) toward the outer circumferential side (Fig. 23(c)) (in other words, the plating P becomes thicker in the direction from the outer circumferential side toward the inner circumferential side), as shown in the example in Fig. 23. Thus, the thickness of the coil of Modification 2-1 can be continuously increased in the direction from the outermost circumferential end toward the innermost circumferential end.

According to Modification 2-1, the thickness of the copper thin-film wire of each coil of Modification 2-1 increases in the direction from the outermost circumferential end toward the innermost circumferential end, and also further increases only at the curved portions. Thus, it is possible to level the current density, while simplifying the process for manufacturing the coils.

Further, as illustrated in Fig. 23, the thicker the copper thin-film wire, the shorter the distance between adjacent copper thin-film wire portions. Thus, resonance frequency can be lowered.

Note that the configuration of Modification 2-2 may be combined with the configuration of the second embodiment, so that both the thickness and the width of each coil are made greater, and the cross-sectional areas of the coils are also made larger.

### (iii) Modification 2-3

Next, Modification 2-3 is described. In the cases described above in the second embodiment and Example 2, the present invention is applied to a power transmission system including a power transmitting coil and/or a power receiving coil each including a loop coil and a two-layer open coil. However, the present invention can be applied not only to that, but also to a power transmission system including a power transmitting coil and/or a power receiving coil that do not include a loop coil, with a two-layer open coil being connected at the innermost circumferential end, the outermost circumferential portion of each open coil being a connection terminal. That is, the cross-sectional area of the copper thin-film wire forming each open coil is increased in the direction from the outermost circumferential end toward the innermost circumferential end, and the cross-sectional area of the copper thin-film wire portion forming a curved portion can be increased more than the cross-sectional area of the copper thin-film wire portion forming a linear portion in the same winding. In this case, the same functions and effects as those of the power transmission system of each second embodiment described above can also be achieved. Further, a power transmitting or power receiving coil can be formed only with such open coils.

### (iv) Modification 2-4

Next, Modification 2-4 is described. In the second embodiment and Example 2 described above, capacitors may be further connected in series or in parallel to the ends of the power-transmitting open coil TO2 or the power-receiving open coil RO2 having the open end T2-1 and the open end T2-2, or in parallel to the power-transmitting loop coil TL2 or the power-receiving loop coil RL2. Thus, resonance frequency can be lowered.

### (v) Other Modifications

Lastly, other modifications are described. In the second embodiment and each Modification 2 described above, the corners of the coil CL2-1 (or the coil CL2-2) each have a rounded shape. Other than that, the corners may be portions of respective copper thin-film wires that are bend at right angle. As a result, the width of the copper thin-film wire portion forming a linear portion other than the corners can be made greater than the width of the copper thin-film wire portion forming the corresponding corner. Accordingly, in this case, the cross-sectional area of the copper thin-film wire portion forming the corner can be made larger than the cross-sectional area of the copper thin-film wire portion forming the linear portion.

Further, in the second embodiment and each Modification 2 described above, the present invention is applied to the structures of the coils CL2-1 and CL2-2 that form the power-transmitting open coil TO2 (or the power-receiving open coil RO2). However, the present invention can also be applied to the structure of the power-transmitting loop coil TL2 or the power-receiving loop coil RL2.

Also, in the second embodiment described above, the respective innermost circumferential portions of the coils CL2-1 and CL2-2 are located at the same position in the windings. However, the innermost circumferential portions may be located at different positions. This also applies to the respective coils constituting the power-transmitting open coil or the power-receiving open coil of each Modification 2.

Further, the coil CL2-1 and the coil CL2-2 of the second embodiment described above are connected by the via V2 at the respective innermost circumferential portions. However, the coil CL2-1 and the coil CL2-2 may be insulated from each other. This also applies to the respective coils constituting the power-transmitting open coil or the power-receiving open coil of each modification.

Furthermore, the position of the power-transmitting loop coil TL2 and the position of the power-transmitting open coil TO2 in the power transmitting coil TC2 of the second embodiment described above may be switched, and the position of the power-receiving loop coil RL2 and the position of the power-receiving open coil RO2 in the power receiving coil RC2 of each second embodiment may be switched. In the entire power transmission system in this case, the power-transmitting loop coil TL2 of the power transmitting coil and the power-receiving loop coil RL2 of the power receiving coil are positioned to face each other inside the power transmission system.

### Industrial Applicability

As described so far, the present invention can be used in the field of wireless power transmission, and can achieve particularly remarkable effects when used in the field of power transmission for charging a storage battery mounted in an electric vehicle.

### DESCRIPTION OF REFERENCE NUMERALS

- S1, S2: Power transmission system
- R1, R2: Power reception apparatus
- T1, T2: Power transmission apparatus
- V1, V2: Via
- RV: Power receiving unit
- RC1, RC2: Power receiving coil
- TR: Power transmitting unit
- TC1, TC2: Power transmitting coil
- TO1, TO2: Power-transmitting open coil
- TL1, TL2: Power-transmitting loop coil
- R01, R02: Power-receiving open coil
- RL1, RL2: Power-receiving loop coil
- CL1-1, CL1-2, CL2-1, CL2-2, CL2-11, CL2-12: Coil
- BF1-1, BF1-2, BF2-1, BF2-2: Film
- O1-1, 01-2, 02-1, O2-2: Connection terminal
- T1-1, T1-2, T2-1, T2-2: Open end
- ET: Copper thin-film wire pattern
- P: Plating

## Claims

1. A coil that is used for power transmission or power reception in wireless power transmission, and is formed with a wound wire,
wherein a cross-sectional area of the wound wire varies depending on a position of the wound wire in a winding.

2. The coil according to claim 1, wherein
the cross-sectional area increases in a direction from an outermost circumferential end toward an innermost circumferential end of the coil.

3. The coil according to claim 2, wherein
the coil comprises a linear portion at which the wound wire is straight, and a curved portion at which the wound wire is curved, and
the cross-sectional area is constant at the linear portion, and increases at the curved portion.

4. The coil according to claim 3, wherein
a width of the wound wire is constant at the linear portion, and the width increases in the direction from the outermost circumferential end toward the innermost circumferential end at the curved portion, so that the cross-sectional area of the entire coil increases in the direction from the outermost circumferential end toward the innermost circumferential end.

5. The coil according to claim 1 or 2, wherein
the coil comprises a plurality of linear portions each formed with the wound wire that is straight, and a plurality of connecting portions each formed by the wound wire connecting the wound wires forming two of the linear portions, the two linear portions having different extending directions, and
a connecting portion cross-sectional area that is the cross-sectional area of at least part of a connecting portion wound wire that is the wound wire forming the connecting portions included in one winding is larger than a linear portion cross-sectional area that is the cross-sectional area of a linear portion wound wire that is the wound wire forming the linear portions included in the one winding.

6. The coil according to any one of claims 1 to 5, wherein
the coil comprises:
an outer-inner wound wire that is the wound wire wound from an outer circumferential side to an inner circumferential side of the coil; and
an inner-outer wound wire that is the wound wire wound from the inner circumferential side to the outer circumferential side of the coil, and
the outer-inner wound wire and the inner-outer wound wire are stacked on each other with an insulating portion interposed in between, so that a winding of the outer-inner wound wire and a winding of the inner-outer wound wire overlap with each other.

7. The coil according to any one of claims 1 to 6, wherein
the wound wire is a thin-film wire that is flat in a radial direction of the coil.

8. A coil pair comprising:
a coil that is the coil according to any one of claims 1 to 7, and is open at either end; and
a loop coil that supplies the coil with electric power to be transmitted at a time of power transmission, and receives, from the coil, electric power received by the coil at a time of power reception, the loop coil being stacked on the coil.

9. A power transmission apparatus that is included in a power transmission system that includes the power transmission apparatus and a power reception apparatus disposed at a distance from the power transmission apparatus, and transmits electric power from the power transmission apparatus to the power reception apparatus in a non-contact manner,
the power transmission apparatus comprising:
one of a power transmitting coil that is the coil according to any one of claims 1 to 7, and a power transmitting coil pair that is the coil pair according to claim 8; and
an output means that outputs electric power to be transmitted, to the one of the power transmitting coil and the power transmitting coil pair.

10. A power reception apparatus that is included in a power transmission system that includes a power transmission apparatus and the power reception apparatus disposed at a distance from the power transmission apparatus, and transmits electric power from the power transmission apparatus to the power reception apparatus in a non-contact manner,
the power reception apparatus comprising:
one of a power receiving coil that is the coil according to any one of claims 1 to 7, and a power receiving coil pair that is the coil pair according to claim 8; and
an input means that is connected to the one of the power receiving coil and the power receiving coil pair.

11. A wireless power transmission system comprising:
the power transmission apparatus according to claim 9; and
a power reception apparatus that is disposed at a distance from the power transmission apparatus and is positioned to face the one of the power transmitting coil and the power transmitting coil pair, and receives electric power transmitted from the power transmission apparatus.

12. A wireless power transmission system comprising:
a power transmission apparatus; and
a power reception apparatus that is the power reception apparatus according to claim 10, is disposed at a distance from the power transmission apparatus, and receives electric power transmitted from the power transmission apparatus, the one of the power receiving coil and the power receiving coil pair being positioned to face the power transmission apparatus.
